(19) Europäisches Patentamt / European Patent Office / Office européen des brevets

(11) **EP 2 608 148 B1**

(12) **EUROPEAN PATENT SPECIFICATION**

(45) Date of publication and mention
of the grant of the patent:
**20.02.2019 Bulletin 2019/08**

(51) Int Cl.:
***G06T 5/00*** *(2006.01)* ***H04N 13/00*** *(2018.01)*

(21) Application number: **12198926.3**

(22) Date of filing: **21.12.2012**

(54) **Method and apparatus for generating multi-view**

Verfahren und Vorrichtung zur Erzeugung einer Mehrfachansicht

Procédé et appareil permettant de générer une multi-vue

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2011 KR 20110141308**

(43) Date of publication of application:
**26.06.2013 Bulletin 2013/26**

(73) Proprietor: **Samsung Electronics Co., Ltd.
Suwon-si, Gyeonggi-do, 443-742 (KR)**

(72) Inventors:
 • **Cho, Yang Ho
 446-712 Gyeonggi-do (KR)**
 • **Park, Du Sik
 446-712 Gyeonggi-do (KR)**
 • **Lee, Ho Young
 446-712 Gyeonggi-do (KR)**
 • **Hwang, Kyu Young
 446-712 Gyeonggi-do (KR)**

(74) Representative: **Grootscholten, Johannes A.M. et al
Arnold & Siedsma
Bezuidenhoutseweg 57
2594 AC The Hague (NL)**

(56) References cited:
 • **BARTCZAK B ET AL: "Display-Independent 3D-TV Production and Delivery Using the Layered Depth Video Format", IEEE TRANSACTIONS ON BROADCASTING, IEEE SERVICE CENTER, PISCATAWAY, NJ, US, vol. 57, no. 2, 1 June 2011 (2011-06-01), pages 477-490, XP011476785, ISSN: 0018-9316, DOI: 10.1109/TBC.2011.2120790**
 • **DONG TIAN ET AL: "View synthesis techniques for 3D video", APPLICATIONS OF DIGITAL IMAGE PROCESSING XXXII, 2 September 2009 (2009-09-02), page 74430T, XP055041884, San Diego, CA DOI: 10.1117/12.829372**
 • **ISMAÃ L DARIBO ET AL: "A Novel Inpainting-Based Layered Depth Video for 3DTV", IEEE TRANSACTIONS ON BROADCASTING, IEEE SERVICE CENTER, PISCATAWAY, NJ, US, vol. 57, no. 2, 1 June 2011 (2011-06-01), pages 533-541, XP011323536, ISSN: 0018-9316, DOI: 10.1109/TBC.2011.2125110**

**Description**

BACKGROUND

1. Field

Example embodiments of the following disclosure relate to a method and apparatus for generating a multi-view, and more particularly, to an image processing method and apparatus that may enhance a spatial-temporal consistency.

2. Description of the Related Art

A multi-view imaging apparatus may output a plurality of motion pictures captured at different viewpoints. To transmit and store information associated with all of multi-view motion pictures to and in an imaging apparatus in real time, a storage device with high specification, a highly efficient transmission line, and a high bandwidth may be used. For example, a great amount of costs may be used to generate images in a multi-view structure, and to transmit the generated images to the respective home televisions (TVs) over a public TV network or a wired network.

Accordingly, when an image processing apparatus, for example, a TV receives a small number of input views, for example, one to three input views, the image processing apparatus may need to generate multi-view images using the input views. Bartczak et al. disclose in a publication "Display-independent 3D-TV production and delivery using the layered depth video format" an approach to 3D-Television that is based on layered depth video (LDV) format. Dong Tian et al. disclose in a publication "View Synthesis techniques for 3D video" how to use synthesis techniques to generate the occlusion layer information for layered depth video (LDV) data.

When multi-view images are generated using the limited number of input views, an occlusion region of a background hidden by a foreground object in an input view may appear as a hole region in a multi-view image.

Accordingly, the hole within the multi-view image may need to be recovered prior to displaying the multi-view image.

The hole within the initial standard viewpoint layer may be recovered by optimal patch search based inpainting that initially performs a hole recovery from a structure of a background of the initial standard viewpoint layer.

The generating the standard viewpoint layer of the current frame may include determining a first weight and a second weight.

The hole within the initial standard viewpoint layer may be recovered by summing up a result obtained by applying the first weight to a first result and a result obtained by applying the second weight to a second result.

The first result may be a result obtained when the hole within the initial standard viewpoint layer is recovered by applying the inter-frame inpainting.

The second result may be a result obtained when the hole within the initial standard viewpoint layer is recovered by applying the intra-frame inpainting.

A first background ratio may be a ratio of a background within a first search region and a second background ratio may be a ratio of a background within a second search region.

The first search region may be a region in which a source patch within the accumulated background layer is searched when optimal patch search based inter-frame inpainting is applied, and the second search region may be a region in which a source patch within the standard viewpoint view is searched when optimal patch search based intra-frame inpainting is applied.

When the first background ratio is greater than the second background ratio, the hole within the initial standard viewpoint layer may be recovered by the inter-frame inpainting. When the first background ratio is less than the second background ratio, the hole within the initial standard viewpoint layer may be recovered by the intra-frame inpainting.

The generating the standard viewpoint layer of the current frame may further include estimating a motion of the standard viewpoint of the current frame.

The estimating may include estimating a motion of each of blocks within the standard viewpoint view, and diffusing an estimated motion of a block corresponding to a background among the blocks to a motion of a block corresponding to a foreground among the blocks.

The updating may include accumulating a background of the standard viewpoint layer by applying an estimated motion of the standard viewpoint view.

The updating may further include initializing the accumulated background layer when a scene change occurs in the current frame.

The foregoing and/or other aspects are achieved by providing an image processing apparatus, including a standard viewpoint view generator to generate a standard viewpoint view about a standard viewpoint using at least one input view of a current frame, an initial standard viewpoint layer generator to generate an initial standard viewpoint layer of the current frame by replacing, using a hole, a region within the standard viewpoint view capable of appearing as a hole at least one viewpoint, a standard viewpoint layer generator to generate a standard viewpoint layer of the current frame by recovering a hole within the initial standard viewpoint layer based on a standard viewpoint layer of at least one previous frame of the current frame and the initial standard viewpoint layer, an output view generator to generate an output viewpoint image an using the at least one input view, and an output view hole recovery unit to recover a hole within the output viewpoint image using the standard viewpoint layer of the current frame.

Additional aspects of embodiments will be set forth in part in the description which follows and, in part, will be apparent from the description, or may be learned by practice of the disclosure.

## BRIEF DESCRIPTION OF THE DRAWINGS

These and/or other aspects will become apparent and more readily appreciated from the following description of embodiments, taken in conjunction with the accompanying drawings of which:

FIG. 1 illustrates an example describing a multi-view rendering method capable of providing spatial-temporal consistency, according to an example embodiment;
FIG. 2 illustrates an image processing apparatus, according to an example embodiment;
FIG. 3 illustrates an image processing method, according to an example embodiment;
FIG. 4 illustrates an example describing a method of determining a standard viewpoint based on two input views and generating an image and a disparity with respect to the standard viewpoint, according to an example embodiment;
FIG. 5 illustrates an example describing a method of determining a standard viewpoint based on (2n+1) input views and generating an image and a disparity with respect to the standard viewpoint, according to an example embodiment;
FIG. 6 illustrates a process of generating an initial standard viewpoint layer, according to an example embodiment;
FIG. 7 illustrates an example describing a process of generating a standard viewpoint layer and disparity information of the standard viewpoint layer, using a standard viewpoint image and standard viewpoint disparity information, according to an example embodiment;
FIG. 8 illustrates an example describing a principle of generating a hole map, according to an example embodiment;
FIG. 9 illustrates an example describing a method of generating a hole map, according to an example embodiment;
FIG. 10 illustrates an example describing a method of determining the number of pixels set as a hole, according to an example embodiment;
FIG. 11 illustrates a method of generating a hole map, according to an example embodiment;
FIG. 12 illustrates a configuration of a standard viewpoint layer generator, according to an example embodiment;
FIG. 13 illustrates a method of generating a standard viewpoint layer, according to an example embodiment;
FIG. 14 illustrates optimal patch search based inpainting, according to an example embodiment;
FIG. 15 illustrates an example describing a method of determining a structure and assigning a priority to a hole pixel, according to an example embodiment;
FIG. 16 illustrates an example describing a source patch search method for optimal patch search based inpainting, according to an example embodiment;
FIG. 17 illustrates an example describing a result of generating an accumulated background layer through a motion estimation, according to an example embodiment;
FIG. 18 illustrates an example describing diffusion of a motion vector, according to an example embodiment;
FIG. 19 illustrates an example describing diffusion of a motion vector between vectors, according to an example embodiment;
FIG. 20 illustrates an example describing iterative diffusion of a motion vector, according to an example embodiment;
FIG. 21 illustrates a method of diffusing a motion vector, according to an example embodiment;
FIG. 22 illustrates an example comparing a result of inter-frame inpainting and a result of intra-frame inpainting, according to an example embodiment;
FIG. 23 illustrates an example comparing a result of inter-frame inpainting and a result of intra-frame inpainting, according to another example embodiment;
FIG. 24 illustrates a method of updating an accumulated background layer, according to an example embodiment;
FIG. 25 illustrates an example describing a process of accumulating a background of a standard viewpoint of layer to an accumulated background layer, according to an example embodiment; and
FIG. 26 illustrates an example describing a process of generating an output view and recovering a hole of an output view, according to an example embodiment.

## DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

Herein, the terms 'disparity' and 'depth' may have inverse proportional relationship with respect to each other. Therefore, the disparity and the depth may be replaced with each other in the following description.

Hereinafter, a t frame may refer to a frame in a predetermined time t or a $t^{th}$ frame. Therefore, when a current frame is the t frame, (t-1) frame may refer to a previous frame of the current frame.

The term 'view' may include an image and disparity information. The image may include at least one pixel. The disparity information may include at least one pixel. A pixel included in the image and a pixel included in the disparity information that have the same coordinates may correspond to each other. In the image, a predetermined pixel may have a color value. In disparity information, a predetermined pixel may have a disparity value. When a pixel in the image indicates a predetermined point of a predetermined object or a color of a predetermined region, a pixel in disparity information corresponding to the pixel in the image may indicate the point or a disparity of the region.

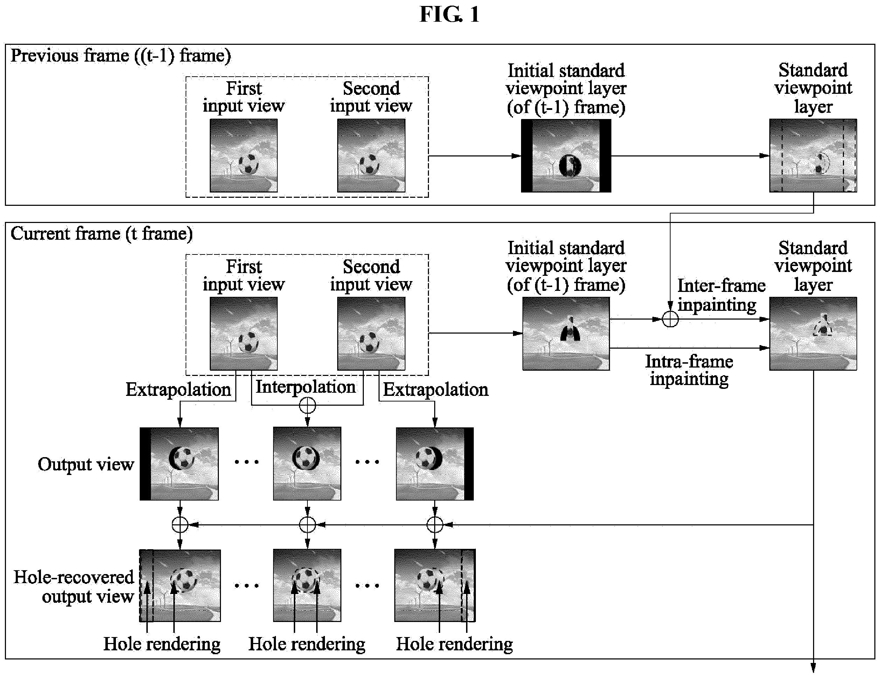

FIG. 1 illustrates an example describing a multi-view rendering method capable of providing spatial-temporal consistency, according to an example embodiment.

FIG. 1 shows at least one input view of a $t^{th}$ frame corresponding to a current frame in a time t. The at least one input view may be obtained by photographing a scene including at least one object at a predetermined viewpoint. A viewpoint of an input view may be referred to as a reference viewpoint.

At least one output view may be generated, based on at least one input view. The at least one output view may include an interpolated view that is generated by interpolation of the at least one input view and an extrapolated view that is generated by extrapolation of the at least one input view. A viewpoint of each of the at least one output view may be referred to as a predetermined viewpoint. When an output view is generated by interpolation or extrapolation, a background region occluded by a foreground object in an input view may appear as a hole in the output view.

A standard viewpoint layer may be used to recover a hole within the output view. Here, hole rendering may indicate an operation of filling a hole. A hole recovered, that is, a portion of an output view, which is filled may be generated by hole rendering, using the standard viewpoint layer.

A standard viewpoint layer of a current frame may be generated using at least one input view of the current frame. The standard viewpoint layer may be used to collectively recover holes within at least one output view having different viewpoints. The holes may be spatially uniformly recovered using the single standard viewpoint layer. That is, the spatial consistency between outputs views may be enhanced by the above collective recovery.

When generating the standard viewpoint layer, based on at least one input view, a maximum hole region may be set in the standard viewpoint layer. The standard viewpoint layer including the maximum hole region may be referred to as an initial standard viewpoint layer. The standard viewpoint layer may be a layer in which a hole within the initial standard viewpoint layer is recovered. The maximum hole region may correspond to a sum of hole regions within all the output views that may be generated based on the at least one input view. The maximum hole region may be recovered by intra-frame inpainting that may recover a hole based on information associated with the initial standard viewpoint layer. Recovery of the maximum hole region, according to intra-frame inpainting may be extended to a time axis, which will be described later.

A standard viewpoint layer may be generated for each frame. When an initial standard viewpoint layer of a t frame is generated, a hole-recovered standard viewpoint layer of a (t-1) frame may be considered to have been generated. The maximum hole region of the initial standard viewpoint layer of the current frame may be recovered based on information associated with a standard viewpoint layer of a previous frame in addition to information associated with the initial standard viewpoint layer of the current frame. Inter-frame inpainting may indicate recovering of the maximum hole region of the initial standard viewpoint layer of the current frame based on an accumulated standard viewpoint layer of each of at least one previous frame of the current frame.

Information used in a previous frame, for example, the standard viewpoint layer of the previous frame, to recover a hole within an output view by inter-frame inpainting may also be consecutively used to recover the hole of the initial standard viewpoint layer of the current frame. Accordingly, holes within initial standard viewpoint layers of neighboring frames may be uniformly recovered on a time axis. A hole recovered standard viewpoint of the current frame may be used to recover the maximum hole region within the initial standard viewpoint layer of a subsequent frame, for example, (t+1) frame, of the current frame.

By employing the standard viewpoint layer generated, based on inter-frame inpainting or intra-frame inpainting, it is possible to enhance spatial-temporal consistency between hole-recovered output views.

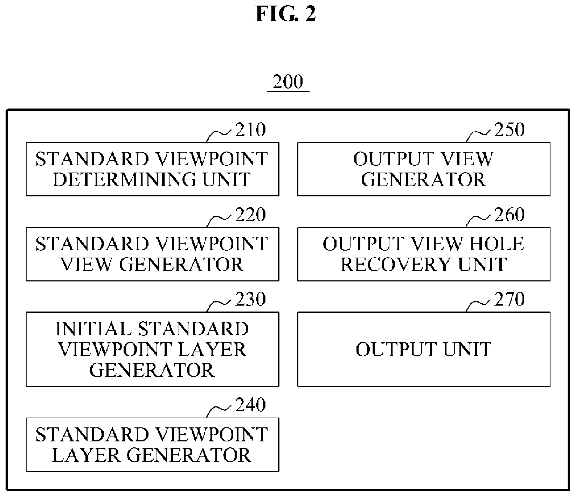

FIG. 2 illustrates an image processing apparatus 200, according to an example embodiment.

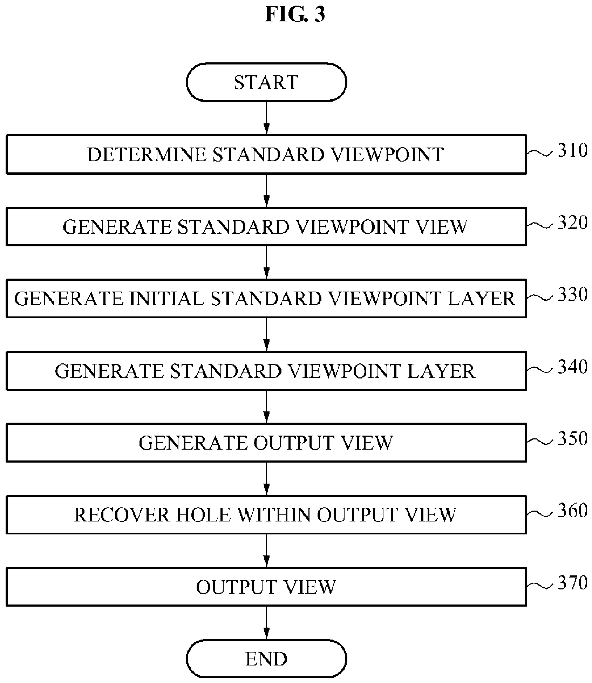

The image processing apparatus 200 may include a standard viewpoint determining unit 210, a standard viewpoint view generator 220, an initial standard viewpoint layer generator 230, a standard viewpoint layer generator 240, an output view generator 250, an output view hole recovery unit 260, and an output unit 270. An operation of each of the above constituent elements will be described with reference to FIG. 3 through FIG. 26.

FIG. 3 illustrates an image processing method, according to an example embodiment.

In operation 310, the standard viewpoint determining unit 210 may determine a standard viewpoint of a standard viewpoint layer.

The standard viewpoint may be a viewpoint of a standard view point layer, a standard viewpoint image, standard viewpoint disparity information, a hole map, and an initial standard viewpoint layer. For example, the standard viewpoint may be a viewpoint that is used to generate the hole map, the standard viewpoint layer, and the like.

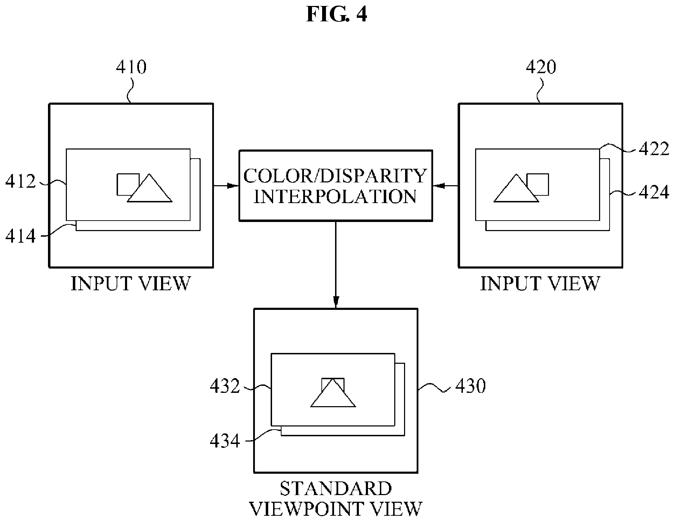

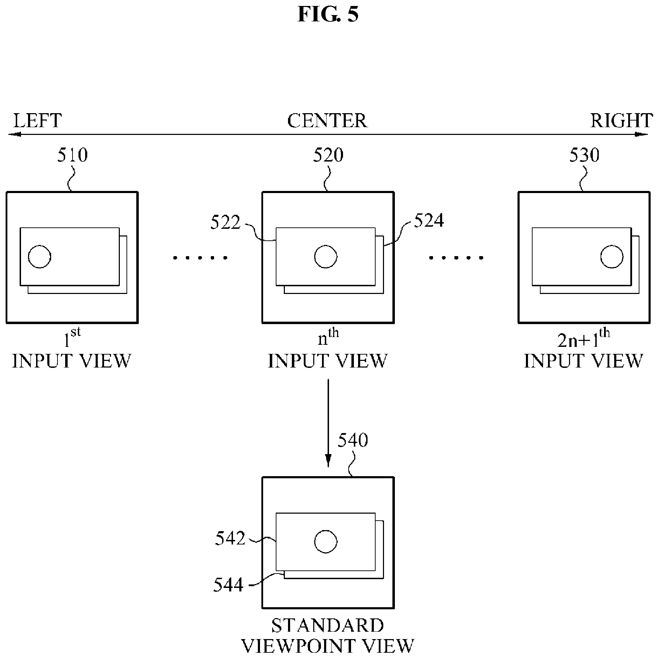

An example of determining the standard viewpoint will be further described with reference to FIG. 4 and FIG. 5.

In operation 320, the standard viewpoint view generator 220 may generate a standard viewpoint view, with respect to the standard viewpoint, using at least one input view of a current frame.

The standard viewpoint view may include an image and disparity information.

In operation 330, the initial standard viewpoint layer generator 230 may generate an initial standard viewpoint layer of the current frame by replace, using a hole, a region within the standard viewpoint view that may appear as a hole from at least one viewpoint by warping to a predetermined viewpoint.

Each of at least one input view may include an image and disparity information.

The initial standard viewpoint layer may include an image and disparity information.

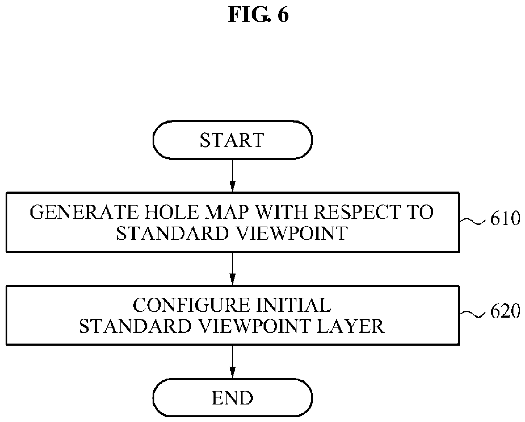

An example of generating the initial standard viewpoint layer will be further described with reference to FIG. 6 through FIG. 11.

In operation 340, the standard viewpoint layer generator 240 may generate the standard viewpoint layer by recovering the hole within the initial standard viewpoint layer, based on a standard viewpoint layer of each of at least one previous frame of the current frame and the initial standard viewpoint layer of the current frame.

The recovered region within the standard viewpoint layer may be used to recover a hole within an output view.

The standard viewpoint layer may include an image and disparity information.

In operation 350, the output view generator 250 may generate at least one output view using at least one input view. Each of the at least one output view may be a view corresponding to a predetermined output viewpoint. Each of the at least one output view may include an image captured at the output viewpoint. The output view generator 250 may generate at least one output view through interpolation or extrapolation using at least one input view. Each of the at least one output generated through the interpolation or the extrapolation may include a hole. Here, an output viewpoint image may indicate an image observed by an observer when the observer views a captured scene at the output viewpoint.

In operation 360, the output view hole recovery unit 260 may recover the at least one output view using the standard viewpoint layer of the current frame.

In operation 370, the output unit 270 may output at least one hole recovered output view.

FIG. 4 illustrates an example describing a method of determining a standard viewpoint based on two input views and generating an image and a disparity with respect to the standard viewpoint, according to an example embodiment.

FIG. 4 shows a first input view 410 and a second input view 420. The first input view 410 and the second input view 420 may be a left input view and a right input view of stereo, for example, 2-way view input, respectively. Alternatively, the first input view 410 and the second input view 420 may be an $n^{th}$ input view and an $(n+1)^{th}$ input view among 2n input views, respectively. Here, 'n' denotes an integer greater than or equal to '1'. The first input view 410 and the second input view 420 may be two input views that are positioned on the center of input views.

The first input view 410 may include an image 412 and disparity information 414. The second input view 420 may include an image 422 and disparity information 424.

In operation 310, the standard viewpoint determining unit 210 may determine, as a standard viewpoint, a center between a viewpoint of the first input view 410 and a viewpoint of the second input view 420. Alternatively, the standard viewpoint determining unit 210 may determine, as a standard viewpoint, a center between viewpoints of two input views that are selected from among the whole input views.

In operation 320, the standard viewpoint view generator 220 may generate a standard viewpoint view 430, that is, a standard viewpoint image 432 and standard viewpoint disparity information 434, based on the first input view 410 and the second input view 420. As another example, the standard viewpoint view generator 220 may generate the standard viewpoint view 430, that is, the standard viewpoint image 432 and standard viewpoint disparity information 434, by performing warping using the image 412 and the disparity information 414 of the first input view 410 and the image 422 and the disparity information 424 of the second input view 420.

FIG. 5 illustrates an example describing a method of determining a standard viewpoint, based on (2n+1) input views and generating an image and a disparity with respect to the standard viewpoint, according to an example embodiment.

FIG. 5 shows odd-numbered input views, for example, a first input view 510, an $n^{th}$ input view 520, and a $(2n+1)^{th}$ input view 530.

The number of input views may be 2n + 1. Here, 'n' may indicate an integer greater than or equal to '0'.

The $n^{th}$ input view 520 corresponding to a center input view may include an image 522 and disparity information 524.

In operation 310, the standard viewpoint determining unit 210 may determine, as a standard viewpoint, a viewpoint of an input view that is positioned in the center of input views. For example, the standard viewpoint determining unit 210 may determine, as a standard viewpoint, a viewpoint of the $n^{th}$ input view 520 among (2n+1) input views.

When the standard viewpoint is identical to a viewpoint of a predetermined view among input views, the standard viewpoint view generator 220 may set or use the predetermined view as a standard viewpoint view 540 in operation 320. The standard viewpoint view generator 220 may set an image of the predetermined view as a standard viewpoint image 542 and may set disparity information of the predetermined view as standard viewpoint disparity information 544. For example, when the standard viewpoint is a viewpoint of the $n^{th}$ input view 520 corresponding to the center input view, the standard viewpoint view generator 220 may set the $n^{th}$ input view 520 as the standard viewpoint view 540.

When the number of input views is an odd number, for example, (2n+1), the standard viewpoint view generator 220 may set, as the standard viewpoint image 542, the image 522 of the $n^{th}$ input view 520, and may set the disparity information 524 of the $n^{th}$ input view 520 as the standard viewpoint disparity information 544 in operation 320.

FIG. 6 illustrates a process of generating an initial standard viewpoint layer, according to an example embodiment.

Operation 330 of FIG. 3 may include operations 610 and 620.

In operation 610, the initial standard viewpoint layer generator 230 may generate a hole map with respect to a standard viewpoint. The hole map may indicate a maximum hole region that may occur in an output view. When pixels within a standard viewpoint view are moved by warping to a predetermined viewpoint, the hole map may indicate pixels corresponding to a region that may appear as a hole from at least one viewpoint among the pixels. That is, a pixel that may appear as a hole from at least one viewpoint among pixels within the standard viewpoint view may be a hole pixel within the hole map. That is, the maximum hole region may be a region by summing up hole regions within all of the output views that may be generated, based on at least one input view. The hole map may be configured by collecting, to a standard viewpoint, information associated with a hole that may appear within a predetermined output view.

In operation 620, the initial standard viewpoint layer generator 230 may configure the initial standard viewpoint layer using the hole map and the standard viewpoint view, that is, a standard viewpoint image and standard viewpoint disparity information.

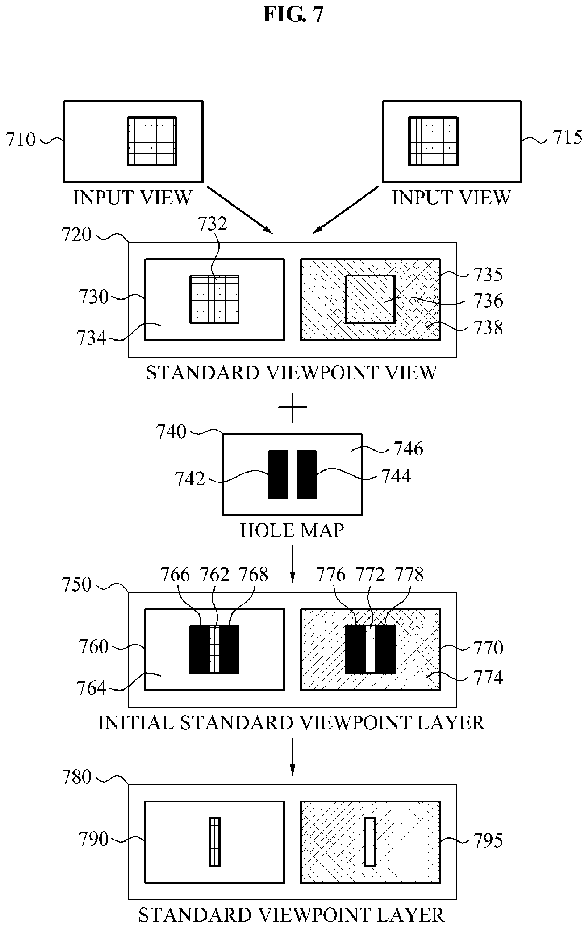

FIG. 7 illustrates an example describing a process of generating a standard viewpoint layer and disparity information of the standard viewpoint layer using a standard viewpoint image and standard viewpoint disparity information, according to an example embodiment.

As described above with reference to FIG. 2 through FIG. 5, a standard viewpoint view 720, that is, a standard viewpoint image 730 and standard viewpoint disparity information 735 may be generated based on at least one input view, for example, input views 710 and 715. The standard viewpoint view 720 may include the standard viewpoint image 730 and the standard viewpoint disparity information 735.

The standard viewpoint image 730 may include a foreground 732 and a background 734. In general, the foreground 732 may have a greater disparity, for example, a smaller depth than the background 734.

The standard viewpoint disparity information 735 may include foreground disparity information 736 associated with the foreground 732 and background disparity information 738, associated with the background 734.

A hole map 740 may include hole portions 742 and 744 and a non-hole portion 746. The hole map 740 may be a binary map in which the hole portions 742 and 744 are expressed as '0' and the non-hole portion 746 is expressed as '1'. A hole may indicate that a disparity of a pixel cannot be known. For example, the hole portions 742 and 744 may indicate that disparities of pixels corresponding to the hole portions 742 and 744 cannot be known.

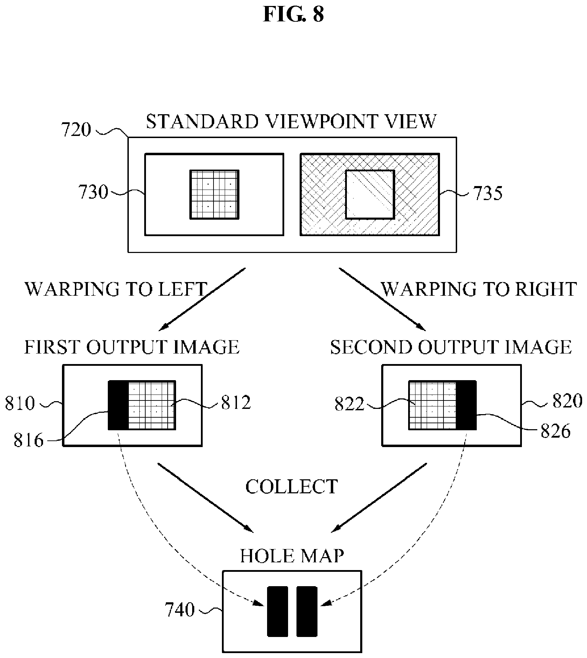

An example of generating, by the initial standard viewpoint layer generator 230 in operation 610, the hole map 740 with respect to the standard viewpoint will be further described with reference to FIG. 8 through FIG. 12.

An initial standard viewpoint layer 750 may include an image 760 and disparity information 770. The image 760 of the initial standard viewpoint layer 750 may include a foreground 762, a background 764, and holes 766 and 768.

In operation 620, the initial standard viewpoint layer generator 230 may configure the image 760 of the initial standard viewpoint layer 750, based on the standard viewpoint image 730 and the hole map 740. For example, the initial standard viewpoint layer generator 230 may set, as the holes 766 and 768, portions corresponding to the hole portions 742 and 744 of the standard viewpoint image 730. The initial standard viewpoint layer generator 230 may set, as the foreground 762 or the background 764, a portion corresponding to the non-hole portion 746 of the standard viewpoint image 730.

In operation 620, the initial standard viewpoint layer generator 230 may generate the disparity information 770 of the initial standard viewpoint layer 750, based on standard viewpoint disparity information 735 and the hole map 740. For example, the disparity information 770 may include foreground disparity information 772 associated with the foreground 762, background disparity information 774 associated with the background 764, and holes 776 and 778.

In operation 620, the initial standard viewpoint layer generator 230 may generate the image 760 of the initial standard viewpoint layer 750, based on an AND operation between the standard viewpoint image 730 and the hole map 740. Through the AND operation, the initial standard viewpoint layer generator 230 may set, as the holes 766 and 768, portions corresponding to '0', for example, the hole portions 742 and 744 of the hole map 740 in the standard viewpoint image 730. In the standard viewpoint image 730, a portion corresponding to '1', for example, the non-hole portion 746 of the hole map 740 may not be affected by the AND operation. Therefore, the initial standard viewpoint layer generator 230 may set, as the foreground 762 or the background 764, the portion corresponding to '1' of the hole map 740 in the standard viewpoint image 730.

That is, the initial standard viewpoint layer generator 230 may use the standard viewpoint image 730 as is with respect to the foreground 762 and the background 764 corresponding to the non-hole portion 746 in the image 760 of the initial standard viewpoint layer 750. Also, the initial standard viewpoint layer generator 230 may set, as the holes 766 and 768, regions corresponding to the hole portions 742 and 744 in the image 760. In addition, the initial standard viewpoint layer generator 230 may use the standard viewpoint disparity information 735 as is with respect to the foreground disparity information 772 and the background disparity information 774 corresponding to the non-hole portion 746 in the disparity information 770 of the initial standard viewpoint layer 750. Furthermore, the initial standard viewpoint layer generator 230 may set, as the holes 776 and 778, the regions corresponding to the hole portions 742 and 744 in the disparity information 770.

In operation 340, the standard viewpoint layer generator 240 may generate a standard viewpoint layer 780 in which all of the holes are recovered, that is, filled through a hole recovery process with respect to the image 760 of the initial standard viewpoint layer 750. The standard viewpoint layer 780 may include an image 790 and disparity information 795. The image 790 and the disparity information 795 may not include a hole.

A hole that may occur when generating an output view at a predetermined viewpoint may be recovered using an integrally recovered hole region in the standard viewpoint layer 780.

A method of recovering the hole within the initial standard viewpoint layer 750 will be further described with reference to FIG. 8 through FIG. 11.

FIG. 8 illustrates an example describing a principle of generating a hole map, according to an example embodiment.

A hole within an output image may occur due to a difference between disparities of adjacent regions within a standard viewpoint image, for example, a difference between a left pixel and a right pixel that are adjacent to each other.

When a corresponding pixel has a greater disparity than a pixel adjacent to and to the left of the corresponding pixel, for example, when $\Delta d_L$, that is, a value obtained by subtracting a disparity of the left pixel from a disparity of the corresponding pixel, is greater than '0', a hole may occur in the left pixel within an output image that is warped from a standard viewpoint to the left.

When the corresponding pixel has a greater disparity than a pixel adjacent to and to the right of the corresponding pixel, for example, when $\Delta d_R$, that is, a value obtained by subtracting a disparity of the right pixel from the disparity of the pixel, is greater than '0', a hole may occur in the right pixel within an output image that is warped from the standard viewpoint to the right.

A first output image 810 may be generated by warping the standard viewpoint view 720 or the standard viewpoint image 730 to the left. A hole 816 corresponding to $\Delta d_L$, for example, 20 pixels, may occur in the left area of a foreground 812 within the first output image 810. A second output image 820 may be generated by warping the standard viewpoint view 720 to the right. A hole 826 corresponding to $\Delta d_R$, for example, 20 pixels, may occur in the right area of a foreground 822 within the second output image 820.

Therefore, a hole region occurring within an output image of a predetermined viewpoint may be predicted by analyzing a disparity difference between adjacent pixels within the standard viewpoint view 720. The hole map 740 may be configured by collecting, as a standard viewpoint image, holes that occur by warping the standard viewpoint view 720 to a predetermined viewpoint.

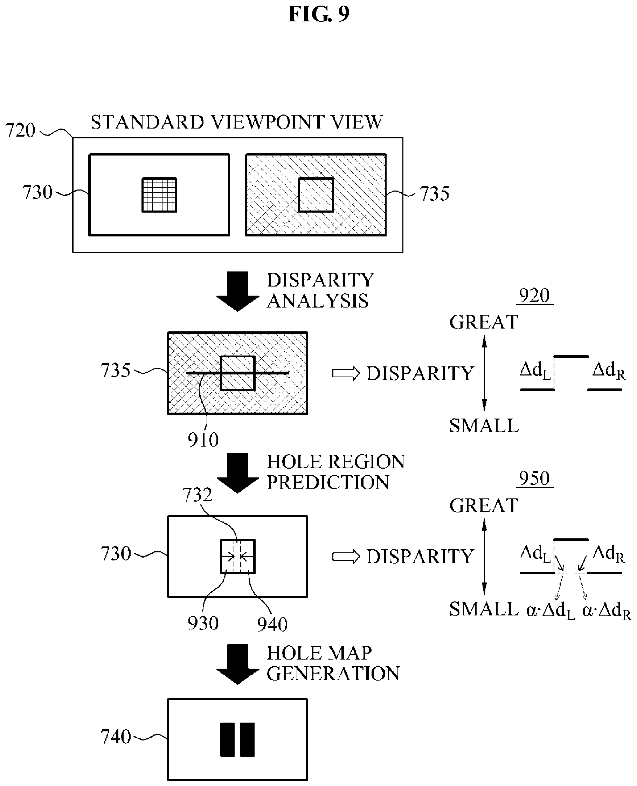

FIG. 9 illustrates an example describing a method of generating a hole map, according to an example embodiment.

To predict a hole region that may occur when generating at least one output view, the initial standard viewpoint layer generator 230 may calculate a disparity difference between pixels within the standard viewpoint view 720.

The disparity difference may include a left difference $\Delta d_L$ and a right difference $\Delta d_R$. The left difference may be a difference with respect to a pixel (hereinafter, a left pixel) adjacent to left of the pixel. The right difference may be a difference with respect to a pixel (hereinafter, a right pixel) adjacent to right of the pixel.

A disparity of a predetermined horizontal line 910 within the standard viewpoint disparity information 735 is expressed as a graph 920.

The initial standard viewpoint layer generator 230 may determine, as a hole region, a region occluded by the foreground 732 within the standard viewpoint image 730 based on the disparity difference as shown in the graph 920.

The initial standard viewpoint layer generator 230 may calculate the region occluded by the foreground 732 based on 1) a left disparity difference, 2) a right disparity difference, 3) an input baseline between input views, and 4) a distance between viewpoints of outermost output views. The initial standard viewpoint layer generator 230 may generate the hole map 740 based on the disparity difference, for example, $\Delta d_L$ and $\Delta d_R$, between pixels within the standard viewpoint image 730.

Hereinafter, an example of determining a region occluded by a foreground, for example, pixels set as a hole will be described.

When a first disparity of a first pixel is greater than a second disparity of a second pixel adjacent to left of the first pixel by at least a threshold, for example, when $\Delta d_L$ of the first pixel is greater than the threshold, the initial standard viewpoint layer generator 230 may set, as a hole, pixels from right of the first pixel. The number of the pixels may correspond to $\alpha \cdot \Delta d_L$. The number of pixels set as the hole may be proportional to a difference between the first disparity and the second disparity. Here, $\alpha$ denotes a constant.

When the first disparity of the first pixel is greater than a third disparity of a third pixel adjacent to right of the first pixel by at least a threshold, for example, when $\Delta d_R$ of the first pixel is greater than the threshold, the initial standard viewpoint layer generator 230 may set, as a hole, pixels from left of the first pixel. The number of the pixels may correspond to $\alpha \cdot \Delta d_R$. The number of pixels set as the hole may be proportional to the difference between the first disparity and the third disparity.

A first region 930 and a second region 940 may indicate a hole region, for example, a region determined to be occluded by the foreground 732, based on the disparity difference between pixels.

A second graph 950 shows an example in which the first region 930 and the second region 940 are set or calculated in proportion to the difference $\Delta d_L$ or $\Delta d_R$, and $\alpha$.

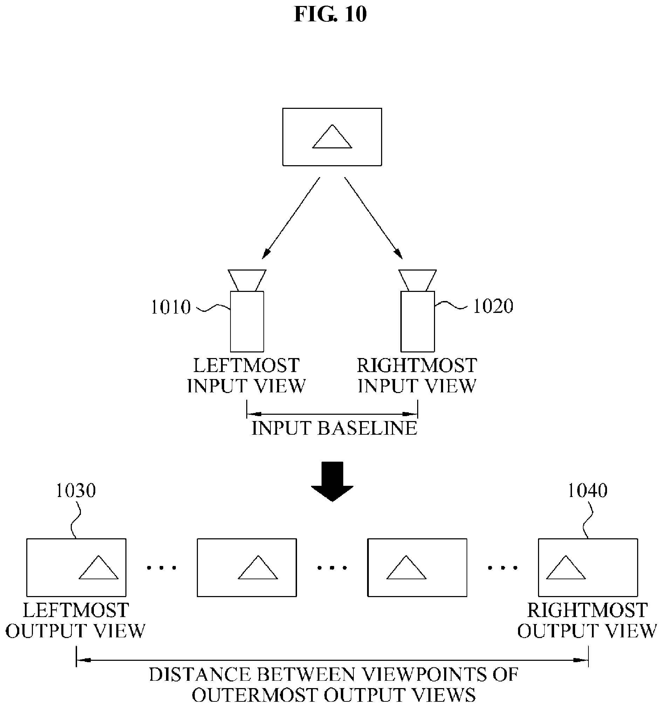

An example of calculating $\alpha$ will be further described with reference to FIG. 10.

The initial standard viewpoint layer generator 230 may store, as a single hole region, a region that is set as a hole through duplication of at least one pixel.

FIG. 10 illustrates an example describing a method of determining the number of pixels set as a hole, according to an example embodiment.

An input baseline may indicate a distance between a viewpoint of a leftmost input view 1010 and a viewpoint of a rightmost input view 1020 among input views.

A leftmost output view 1030 may be an output view having a leftmost viewpoint, among output views that are generated, based on at least one input view. A rightmost output view 1040 may be an output view having a rightmost viewpoint, among the output views.

When a distance between viewpoints of outermost output views is greater compared to the input baseline, a higher number of pixels may be set as a hole due to a disparity difference between two adjacent pixels.

For example, the initial standard viewpoint layer generator 230 may calculate $\alpha$ according to Equation 1:

[Equation 1]

$$\alpha = \frac{\text{Distance between viewpoints of outermost output views}}{\text{Input baseline}}$$

$\alpha$ may indicate a ratio of the distance between the viewpoints of the outermost output views to the input baseline.

For example, when a maximum distance between viewpoints of output views is twice a maximum distance between viewpoints of input views, $\alpha$ may become '2'.

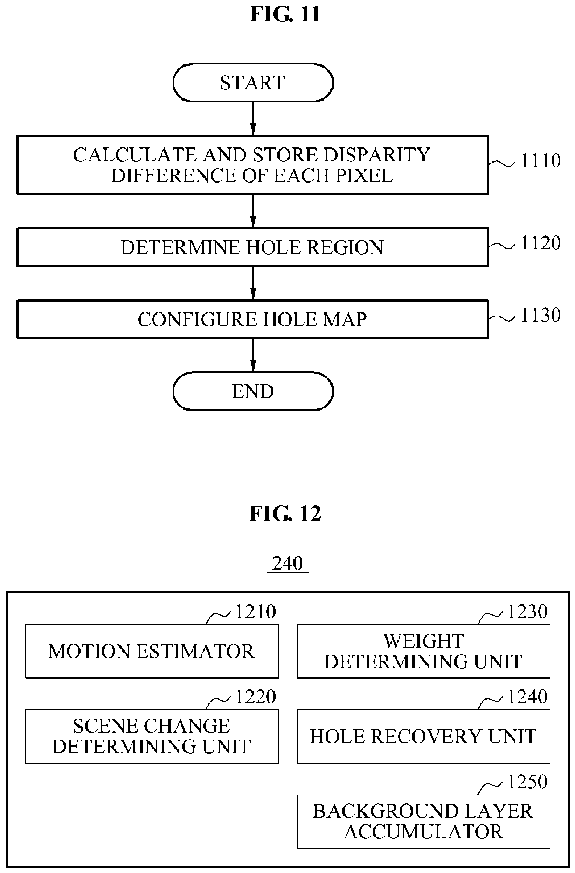

FIG. 11 illustrates a method of generating a hole map, according to an example embodiment.

Operation 610 of FIG. 6 may include operations 1110, 1120, and 1130 of FIG. 11.

In operation 1110, the initial standard viewpoint layer generator 230 may calculate and store a disparity difference, for example, a left difference $\Delta d_L$ and a right difference $\Delta d_R$, of each pixel within the standard viewpoint view 720 to predict a hole region that may occur when generating at least one output image.

In operation 1120, the initial standard viewpoint layer generator 230 may determine a region occluded by a foreground as the hole region, using the calculated difference disparity.

In operation 1130, the initial standard viewpoint layer generator 230 may configure the hole map 740, using the region that is determined as the hole region.

The technical description described above with reference to FIG. 1 through FIG. 10 may be applied to the present embodiment and thus, further detailed description will be omitted here.

FIG. 12 illustrates a configuration of a standard viewpoint layer generator 240, according to an example embodiment.

The standard viewpoint layer generator 240 may include a motion estimator 1210, a scene change determining unit 1220, a weight determining unit 1230, a hole recovery unit 1240, and a background layer accumulator 1250.

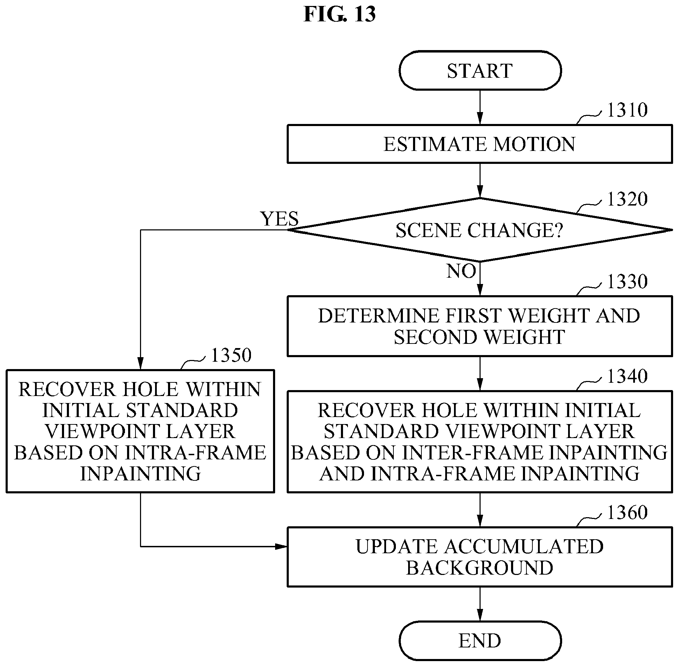

An operation of each of the above constituent elements will be described with reference to FIG. 13 through FIG. 26.

FIG. 13 illustrates a method of generating a standard viewpoint layer, according to an example embodiment.

Initially, inter-frame inpainting and intra-frame inpainting will be described.

The inter-frame inpainting may indicate recovering a hole within an initial standard viewpoint layer, based on an accumulated background layer. The accumulated background layer may be generated by accumulating a background of a standard viewpoint layer of each of at least one previous frame of a current frame. The intra-frame inpainting may indicate recovering a hole within an initial standard viewpoint layer, based on the initial standard viewpoint layer or information associated with the initial standard viewpoint layer.

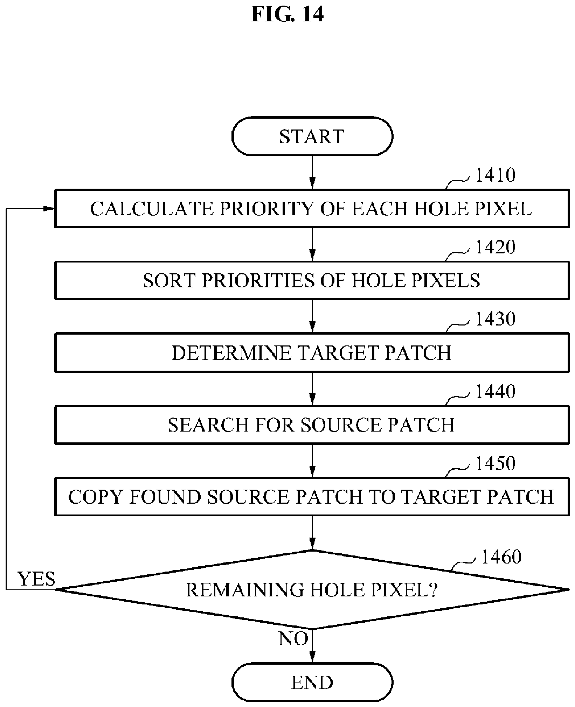

In the inter-frame inpainting and the intra-frame inpainting, a hole within the initial standard viewpoint layer may be recovered by optimal patch search based inpainting that initially performs recovery from a structure of a background of the initial standard viewpoint layer. The optimal patch search based inpainting will be described with reference to FIG. 14 through FIG. 16. The inter-frame inpainting employing the optimal patch search based inpainting method will be referred to as optimal patch search based inter-frame inpainting. The intra-frame inpainting employing the optimal patch search based inpainting method will be referred to as optimal patch search based intra-frame inpainting.

In operation 1310, the motion estimator 1210 may estimate a motion of a standard viewpoint of a current frame. The estimated motion may be used to determine whether a scene change has occurred in the current frame in operation 1320, and may be used to update an accumulated background layer in operation 1360.

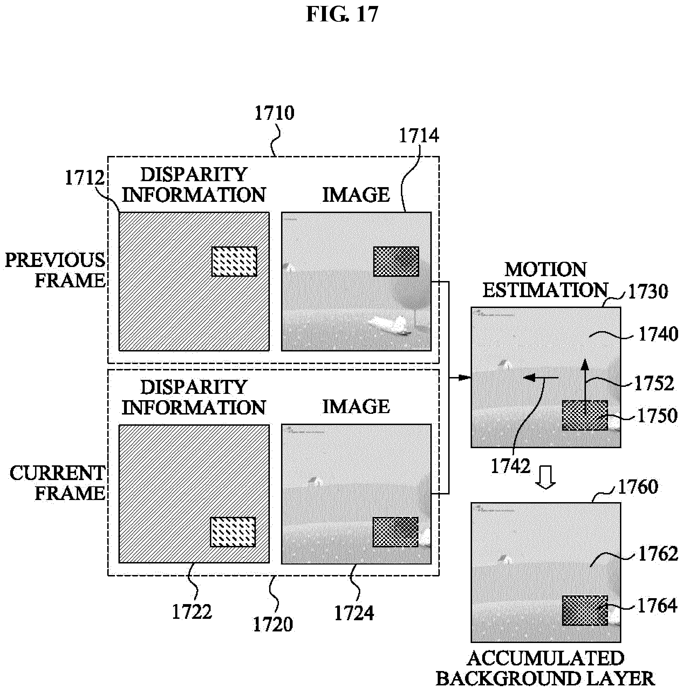

A method of estimating the motion of the standard viewpoint of the current frame will be further described with reference to FIG. 17 through FIG. 21.

In operation 1320, the scene change determining unit 1220 may determine whether the scene change has occurred in the standard viewpoint view of the current frame. When the scene change occurs, information associated with the current frame, for example, an image and depth information within an input view may be significantly different from information associated with a previous frame. Accordingly, when the scene change occurs, and when inter-frame inpainting of recovering a hole within an initial standard viewpoint layer, using an accumulated background layer is used, an error may occur in a hole recovered result. When the scene change occurs, the existing accumulated background layer may not be used. Accordingly, when the scene change occurs, the background layer accumulator 1260 may initialize the accumulated background layer in operation 1360.

When the scene change occurs, operation 1350 may be performed. On the contrary, when the scene change does not occur, operation 1330 may be performed.

The scene change determining unit 1220 may determine that the scene change has occurred in a first frame. Therefore, intra-frame inpainting may be applied to an initial standard viewpoint layer of the first frame.

When a difference between the current frame and the previous frame or between standard viewpoint views of the current frame and the previous frame, for example, a change in a brightness and the like, is greater than or equal to a threshold, the scene change determining unit 1220 may determine that the scene change has occurred.

The scene change determining unit 1220 may determine whether the scene change has occurred based on a sum of absolute differences (SAD) between corresponding blocks, among blocks within the standard viewpoint view of the current frame and blocks within the standard viewpoint view of the previous frame. A block within the standard viewpoint view of the current frame will be referred to as a current block, and a block within the standard viewpoint view of the previous frame will be referred to as a previous block. The current block may include at least one pixel within the standard viewpoint view of the current frame, and the previous block may include at least one pixel within the standard viewpoint view of the previous frame.

In operation 1310, the motion estimator 120 may determine a motion vector with respect to each of current blocks. Each of the current blocks may correspond to a predetermined previous block based on the motion vector. For example, when a predetermined previous block is estimated to be moved to a predetermined current block based on the motion vector, the predetermined previous block may correspond to the predetermined current block.

With respect to each of current blocks, the motion estimator 1210 may calculate a SAD between a current block and a previous block corresponding to the current block. When the number or a ratio of current blocks having the calculated SAD greater than or equal to a first threshold, among the entire current blocks, is greater than or equal to a second threshold, the motion estimator 1210 may determine that the scene change has occurred in the current frame.

In operation 1330, the weight determining unit 1230 may determine a first weight and a second weight.

In operation 1340, the hole recovery unit 1240 may recover the hole within the initial standard viewpoint layer by adaptively fusing a first result and a second result. In this example, the first result may be a result obtained when the hole within the initial standard viewpoint layer is recovered by applying inter-frame inpainting, and the second result may be a result obtained when the hole within the initial standard viewpoint layer is recovered by applying intra-frame inpainting.

The first weight may indicate an application ratio of the first result when recovering the hole within the initial standard viewpoint layer. The second weight may indicate an application ratio of the second result when recovering the hole within the initial standard viewpoint layer.

In operation 1340, the hole recovery unit 1240 may finally recover the hole within the initial standard viewpoint layer based on at least one of the inter-frame inpainting and the intra-frame inpainting.

The hole recovery unit 1240 may recover the hole within the initial standard viewpoint layer, according to Equation 2:

[Equation 2]

$$I_{fusion} = (1 - \beta) \cdot I_{inter} + \beta \cdot I_{intra}$$

In Equation 2, $I_{fusion}$ denotes the result obtained by finally recovering the hole within the initial standard viewpoint layer, that is, the standard viewpoint layer, $I_{inter}$ denotes the first result obtained when recovering the hole within the initial standard viewpoint layer by applying inter-frame inpainting, $I_{intra}$ denotes the second result obtained when recovering the hole within the initial standard viewpoint layer by applying the intra-frame inpainting, $1-\beta$ denotes the first weight, and $\beta$ denotes the second weight. A sum of the first weight and the second weight may be '1'.

For example, the hole recovery unit 1240 may recover the hole within the initial standard viewpoint layer by summing up a result obtained by applying the first weight to the first result and a result obtained by applying the second weight to the second result.

The first weight and the second weight may be determined for each block within the initial standard viewpoint layer. The first weight and the second weight may be determined for each pixel within the initial standard viewpoint layer. Accordingly, a different recovery method may be used for each block or pixel within the initial standard viewpoint layer. A first hole within the initial standard viewpoint layer may be recovered by inter-frame inpainting and a second hole within the initial standard viewpoint layer may be recovered by intra-frame inpainting.

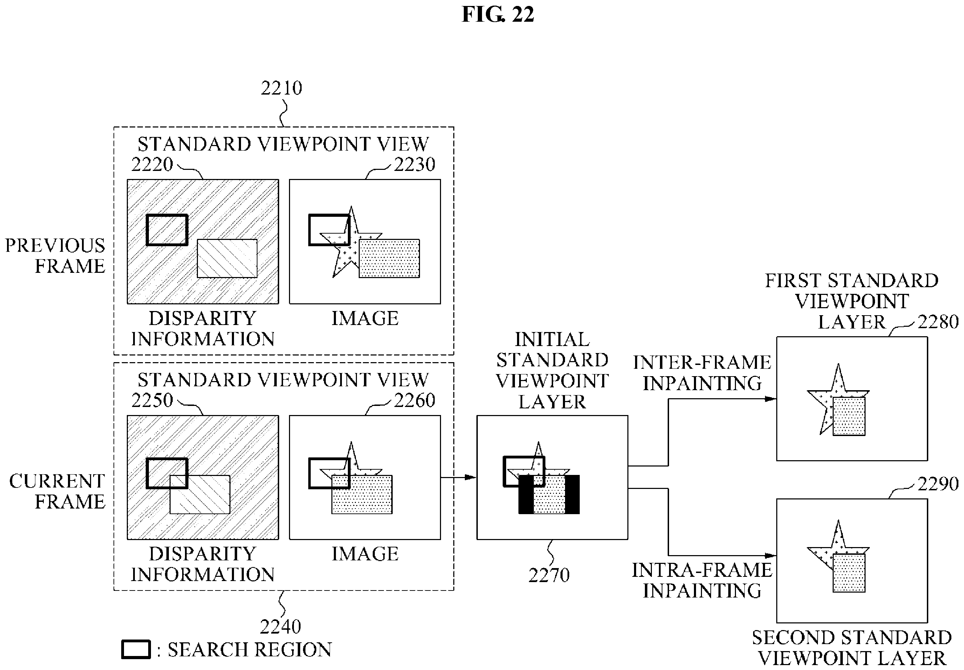

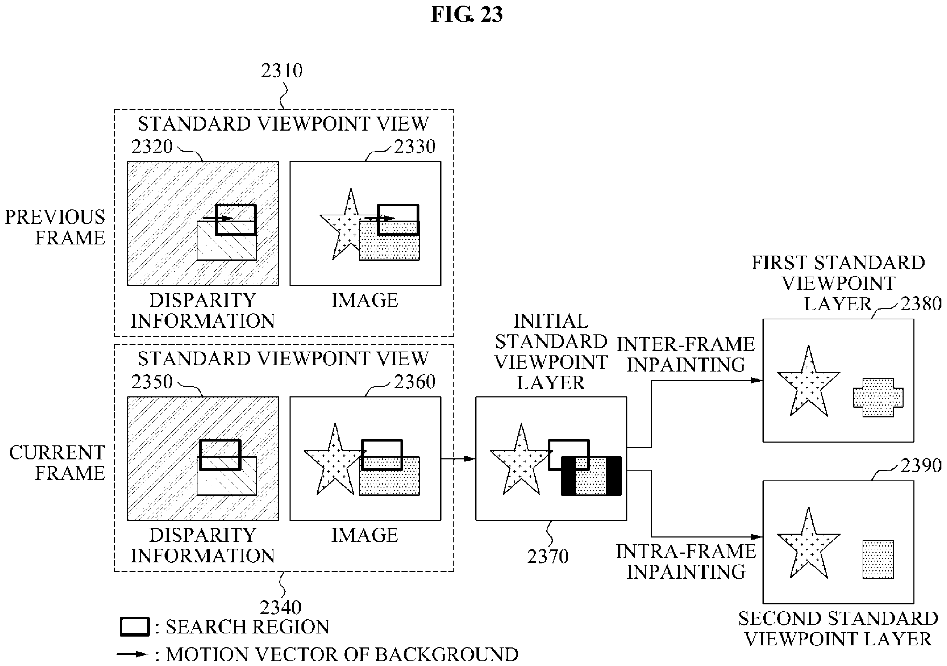

A method of determining the first weight and the second weight will be further described with reference to FIG. 22 and FIG. 23.

In operation 1350, the hole recovery unit 1240 may finally recover the hole within the initial standard viewpoint layer based on intra-frame inpainting.

Operation 1350 may be performed when the scene change is determined to have occurred in the current frame. Since the scene change has occurred, the hole recovery unit 1240 may not use information associated with the previous frame to recover the hole within the initial standard viewpoint layer.

Through operations 1340 and 1350, the hole recovery unit 1240 may generate a standard viewpoint layer by recovering the hole within the initial standard viewpoint layer.

In operation 1360, the background layer accumulator 1250 may update an accumulated background layer using the standard viewpoint layer of the current frame. The accumulated background layer through updating may include information associated with the standard viewpoint layer of the current frame and be used to recover a hole within an initial standard viewpoint layer of a subsequent frame.

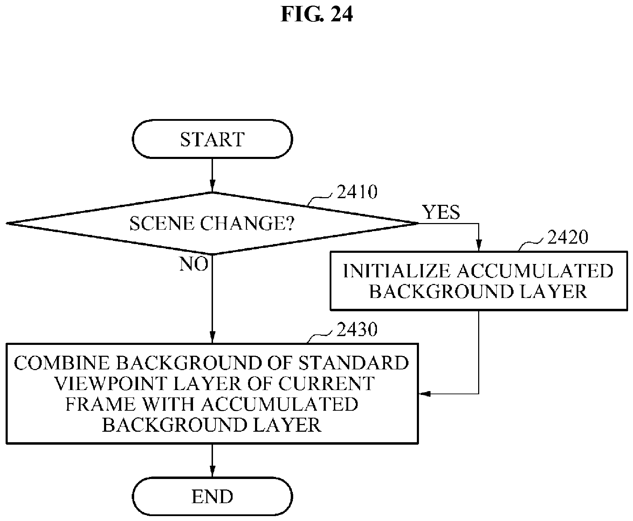

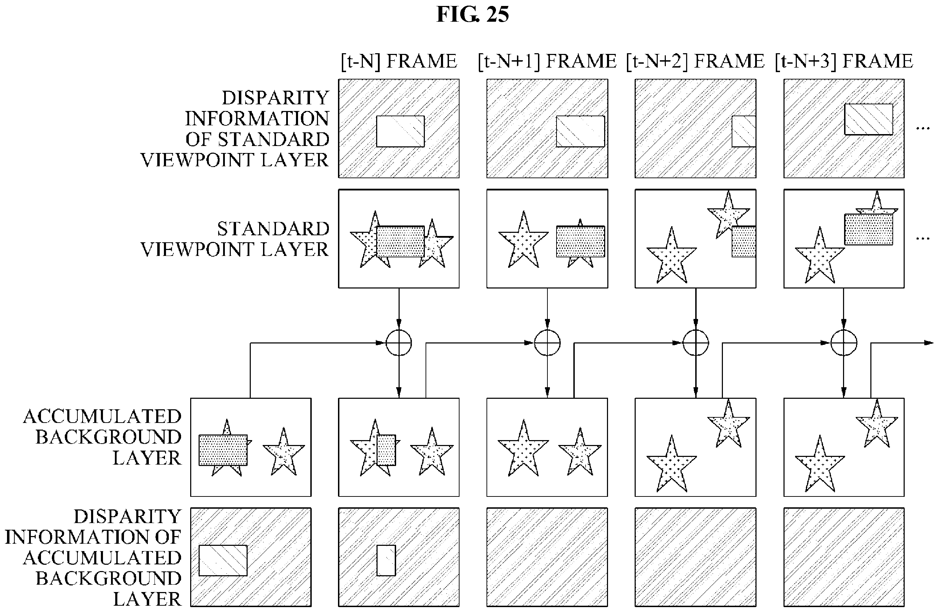

A method of updating the accumulated background layer will be further described with reference to FIG. 24 and FIG. 25.

FIG. 14 illustrates optimal patch search based inpainting, according to an example embodiment.

In operation 1410, for each pixel, the hole recovery unit 1240 may analyze whether a hole pixel is included within a visually robust structure and may calculate a priority of a hole pixel using a quantified analysis result.

By initially recovering a hole pixel that expresses a main structure among a plurality of hole pixels, the hole recovery unit 1240 may recover the hole within the initial standard viewpoint layer while maintaining the main structure within the initial standard viewpoint layer.

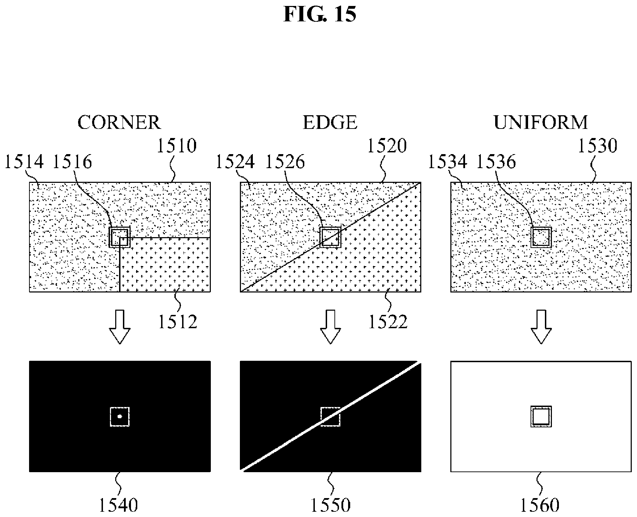

An example of a method of calculating, by the hole recovery unit 1240, a priority of a hole pixel will be further described with reference to FIG. 15.

In operation 1420, the hole recovery unit 1240 may sort priorities of hole pixels.

In operation 1430, the hole recovery unit 1240 may determine a target patch. The target patch may be a block including, as a center, a hole pixel with a highest priority.

In operation 1440, the hole recovery unit 1240 may search for a source patch within an initial standard viewpoint layer or an accumulated background layer. The source patch may be a block most similar to the target patch.

When the hole recovery unit 1240 performs inter-frame inpainting, the hole recovery unit 1240 may search for a source patch within the accumulated background layer. When the hole recovery unit 1240 performs intra-frame inpainting, the hole recovery unit 1240 may search for a source patch within the initial standard viewpoint layer.

The hole recovery unit 1240 may calculate a similarity between the target patch and the source patch based on at least one of the following criteria 1 through 3:

Criterion 1: a difference of a red, green, blue (RGB) value between a pixel of the target patch and a pixel of the source patch corresponding to the pixel of the target patch;

Criterion 2: a difference between a block structure of the target patch and a block structure of the source patch. Here, in the block structure, pixels having a brightness value greater than a reference value may be set to '1' and pixels having a brightness value less than the reference value may be set to '0'. The hole recovery unit 1240 may calculate a bitwise difference value between the block structure of the target patch and the block structure of the source patch.

Criterion 3: a difference between spatial coordinates of the target patch and spatial coordinates of the source patch.

In operation 1450, the hole recovery unit 1240 may recover a hole pixel having a highest priority by copying the found source patch to the target patch. The above copying may indicate using a color and disparity information of each pixel within the source patch as a color and disparity information of a corresponding pixel within the target patch. Here, an image of the initial standard viewpoint layer or the accumulated background layer may be used for the color of the pixel. Disparity information of the initial standard viewpoint layer or the accumulated background layer may be used for disparity information of the pixel.

In addition to the hole pixel having the highest priority, at least one another hole pixel within the target patch may be recovered through the above copying.

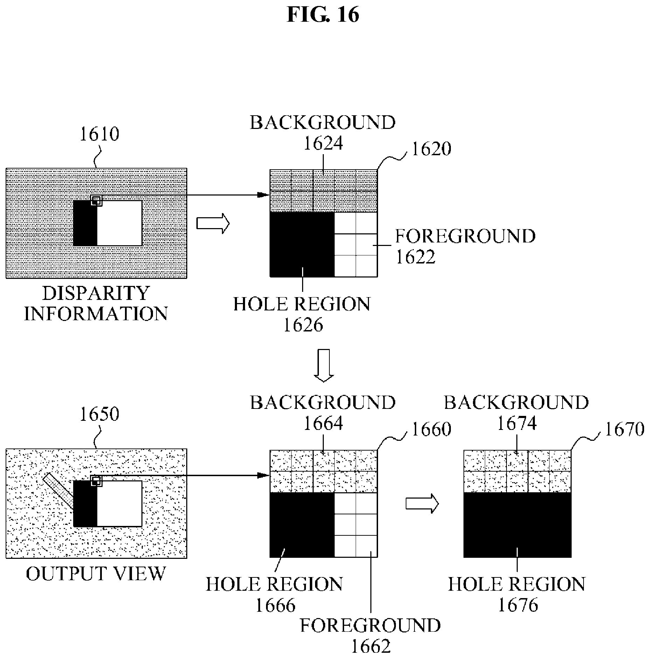

An example of a method of searching, by the hole recovery unit 1240, for the source patch will be further described with reference to FIG. 16.

In operation 1460, the hole recovery unit 1240 may check whether there is a hole pixel remaining within the initial standard viewpoint layer. When there is the remaining hole pixel, the recovery operation may need to be repeated. Through the recovery in operation 1450, a priority of each hole pixel may be changed. Accordingly, when there is the remaining hole pixel, operation 1410 may be performed again. On the contrary, when there is no remaining hole pixel, the procedure may be terminated since a standard viewpoint layer is generated.

A hole boundary pixel may indicate a pixel adjacent to a non-hole pixel among pixels within the hole of the initial standard viewpoint layer. For example, the hole boundary pixel may indicate a pixel positioned in a boundary between a hole region and a non-hole region among hole pixels.

In general, the hole boundary pixel may have a higher priority than other hole pixels. Accordingly, in operations 1410 through 1460, the hole pixel may be replaced with the hole boundary pixel. For example, a priority of each hole boundary pixel may be calculated and a target patch including a hole boundary pixel with a highest priority may be initially recovered.

FIG. 15 illustrates an example describing a method of determining a structure and assigning a priority to a hole pixel, according to an example embodiment.

Hereinafter, a method of determining a structure based on the number of patches having the same pattern as the target patch including a hole, and assigning a priority to a hole pixel will be described.

In FIG. 15, a first view 1510 indicates a corner, a second view 1520 indicates an edge, and a third view 1530 indicates a uniform image. A target patch 1516 of the first view 1510, a target patch 1526 of the second view 1520, and a target patch 1536 of the third view 1530 are shown. Each of the first view 1510, the second view 1520, and the third view 1530 may be an initial standard viewpoint layer.

The first view 1510 including a corner region may include two regions 1512 and 1514 having different colors or different disparities. The second view 1520 including an edge region may include two regions 1522 and 1524 having different colors or different disparities. The third view 1530 indicating a uniform region may include a single region 1534.

The hole recovery unit 1240 may assign a higher priority to a hole pixel, according to a decrease in the number of structure bodies identical to a structure expressed by the hole pixel with a region adjacent to the hole pixel. The region adjacent to the hole pixel may indicate a region within a block having a predetermined size centered at the hole pixel.

The hole recovery unit 1240 may assign a higher priority to a hole pixel, according to a decrease in the number of patches having the same pattern as a target patch including the hole pixel within the region adjacent to the hole pixel.

Images 1540, 1550, and 1560 illustrate a patch search result are provided below the first view 1510, the second view 1520, and the third view 1530, respectively. In each of the images 1540, 1550, and 1560, a white portion may indicate a center of a patch having the same pattern as a target patch. For example, in the first view 1510 or a region adjacent to the target patch 1516, a patch having the same pattern as the target patch 1516 may be the target patch 1516 itself. Accordingly, only a single dot may be indicated in white within the image 1540.

In the second view 1520, patches having the same pattern as the target patch 1526 exist along a diagonal line forming a boundary between the regions 1524 and 1522, that is, along an edge direction. Accordingly, the diagonal line may be indicated in white within the image 1550.

In the third view 1530, all the patches have the same pattern as the target patch 1536. Accordingly, the entire image 1560 may be indicated in white in the image 1560.

When a target patch corresponds to a predetermined texture having a random pattern, the target patch may have a characteristic similar to a characteristic of the target patch 1516 indicating the corner region. When a target patch corresponds to a repetitive texture having the repeating same pattern, the target patch may have a characteristic similar to a characteristic of the target patch 1526 indicating the edge region.

Accordingly, the hole recovery unit 1240 may assign higher priorities to hole pixels in an order of 1) a hole pixel indicating a corner, 2) a hole pixel indicating a random texture, 3) a hole pixel indicating an edge, 4) a hole pixel indicating a repetitive texture, and 5) a hole pixel indicating a uniform region.

Whether two patches have the same patterns may be determined based on a difference of RGB values between pixels corresponding to the two patches. For example, with respect to a target patch and a predetermined patch to be compared with, the hole recovery unit 1240 may calculate a difference of RGB values between all the corresponding pixels included in both patches. The hole recovery unit 1240 may sum up the differences and may determine that the predetermined patch has the same pattern as a pattern of the target patch when the sum is less than or equal to a reference value.

The hole recovery unit 1240 may use, as a priority of a hole pixel, an inverse number of the number of points, that is, patch positions where an average or a sum of differences of RGB values between pixels in the target patch and pixels in a patch including the hole pixel in a search region is less than a reference value. Here, in the search region, patches having the same pattern may be found. For example, a hole pixel of the first view 1510 may have a priority of '1/1', and a hole pixel of the third view 1530 may have a priority of '1/(the number of pixels in the search region)'.

Using the aforementioned method, the hole recovery unit 1240 may initially perform hole recovery with respect to a point, that is, a hole pixel in which a main structure exists around a hole within the initial standard viewpoint layer.

Hereinafter, a method of identifying a structure based on a size of a change in a brightness value of a hole boundary pixel and assigning a priority to a hole pixel will be described.

The hole recovery unit 1240 may calculate a change in a brightness value of a hole pixel into a horizontal direction, for example, a gradient value and a change in the brightness value into a vertical direction, according to Equation 3, and may determine a priority of the hole pixel based on the geometric average of the changes in the horizontal direction and the vertical direction.

$$[\text{Equation 3}]$$

$$I_x = \frac{\partial I(x,y)}{\partial x} \ , \quad I_y = \frac{\partial I(x,y)}{\partial y} \ , \quad G(I) = \sqrt{I_x^{\,2} + I_y^{\,2}}$$

In Equation 3, x and y denote coordinates of the hole pixel, $I(x, y)$ denotes a brightness value of the hole pixel, $I_x$ denotes a change in the brightness value of the hole pixel into the horizontal direction, $I_y$ denotes a change in the brightness value of the hole pixel into the vertical direction, and G(I) denotes a gradient value of the brightness value of the hole pixel.

The hole recovery unit 1240 may determine a priority of the hole pixel based on the change in the brightness value of the hole pixel. For example, the hole recovery unit 1240 may normalize the change to a value between '0' and '1', and may use the normalized value as a quantified value of the priority of the hole pixel. Accordingly, the hole recovery unit 1240 may set a priority so that hole recovery may be applied to edge components, that is, hole pixels indicating an edge, in a descending order of brightness values of the edge components.

In general, a hole boundary pixel may have a relatively high priority compared to other hole pixels. Accordingly, in the above description, the hole pixel may be replaced with the hole boundary pixel.

FIG. 16 illustrates an example describing a source patch search method for optimal patch search based inpainting, according to an example embodiment.

FIG. 16 shows an initial standard viewpoint layer 1650 and disparity information 1610 of the initial standard viewpoint layer 1650.

In the following, when the hole recovery unit 1240 recovers a hole within the initial standard viewpoint layer 1650 using intra-frame inpainting, a source patch may be found within the initial standard viewpoint layer 1650. When the hole recovery unit 1240 recovers a hole within the initial standard viewpoint layer 1650 using inter-frame inpainting, a source patch may be found within an accumulated background layer.

A target patch 1660 may include a foreground 1662, a background 1664, and a hole 1666. The foreground 1662, the background 1664, and the hole 1666 may be mixed within the target patch 1660. Disparity information 1620 of the target patch 1660 may include a foreground 1622, a background 1624, and a hole 1626.

When a target patch does not include a foreground, the hole recovery unit 1240 may search for a most similar background within the initial standard viewpoint layer 1650 or an accumulated standard viewpoint layer. However, as shown in FIG. 16, when the target patch 1660 includes the foreground 1662 and the background 1664, that is, when the foreground 1662 is not separated from the target patch 1660, the hole recovery unit 1240 may select, as a source patch, a patch similar to the foreground 1662. Accordingly, an error that the hole recovery unit 1240 recovers a hole within the initial standard viewpoint layer 1650 using information associated with a foreground may occur. The error may indicate that a foreground within the initial standard viewpoint layer 1650 or an accumulated standard viewpoint layer is diffused to a hole within the initial standard viewpoint layer 1650.

The hole recovery unit 1240 may classify pixels within the target patch 1660 into a foreground pixel and a background pixel by analyzing disparities of the pixels.

When the disparities of the pixels within the target patch 1660 are classified into a single group, the hole recovery unit 1240 may determine all of the pixels as a background. When the disparities of the pixels within the target patch 1660 are classified into two groups, the hole recovery unit 1240 may determine, as a background, only pixels included in a group having low disparities and may determine, as a foreground, pixels included in a group having different disparities.

The hole recovery unit 1240 may select only background pixels from among the pixels within the target patch 1660 based on the disparities of the pixels within the target patch 1660, and may determine, as a source patch within the initial standard viewpoint layer 1650 or the accumulated standard viewpoint layer, pixels most similar to the selected background pixels. For example, the hole recovery unit 1240 may determine the source patch using only the background pixels among the pixels within the target patch 1660.

FIG. 16 shows a target patch 1670 in which only background pixels are selected. The target patch 1670 may include a background 1674 and a hole 1676. A region corresponding to the foreground 1662 in the target patch 1660 is a portion of the hole 1676 in the target patch 1670.

A background occluded by a foreground in an input view may be observed in an initial standard viewpoint layer. The occluded background may appear as a hole in the initial standard viewpoint layer. Accordingly, the hole recovery unit 1240 may recover the hole using information associated with the background, excluding information associated with the foreground. The hole recovery unit 1240 may derive a visually natural result by recovering the hole with maintaining a structure of the background.

FIG. 17 illustrates an example describing a result of generating an accumulated background layer through a motion estimation, according to an example embodiment.

The hole recovery unit 1240 may estimate a motion of a standard viewpoint view 1720 of a current frame by comparing a standard viewpoint view 1710 of a previous frame and the standard viewpoint view 1720 of the current frame.

Referring to FIG. 17, the standard viewpoint view 1710 of the previous frame may include disparity information 1712 and an image 1714, and the standard viewpoint view 1720 of the current frame may include disparity information 1722 and an image 1724. Based on the disparity information 1712 and 1722, it can be known that a foreground and a background are present in the standard viewpoint view 1710 of the previous frame and a foreground and a background are also present in the standard viewpoint view 1720 of the current frame.

Referring to FIG. 17, in the standard viewpoint 1720 of the current frame, the background may be being panned to the right and the foreground may be moving downward. When a general motion estimation method is employed, it is possible to estimate a motion direction of each of blocks between consecutive blocks. A block may include at least one pixel within the standard viewpoint view 1720.

A motion estimated view 1730 may include a background 1740 and a foreground 1750. An estimated motion vector 1742 of the background 1740 and an estimated motion vector 1752 of the foreground 1750 are indicated. The general motion estimation method may estimate a motion direction of a block regardless of whether the block corresponds to the background 1740 or the foreground 1750.

To recover a hole within an initial standard viewpoint layer, information associated with a background occluded by a foreground in the standard viewpoint view 1720 of the current frame may need to be present within an accumulated background layer 1760. The motion vector 1752 indicates a foreground within the standard viewpoint view 1710 of the previous frame. Accordingly, it is not possible to identify which portion of the standard viewpoint view 1710 of the previous frame corresponds to information associated with a background occluded by the foreground 1750 in the motion estimated view 1730. Accordingly, the accumulated background layer 1760 may include a foreground 1764 in addition to a background 1762. Backgrounds of consecutive frames may not be accurately accumulated in the accumulated background layer 1760.

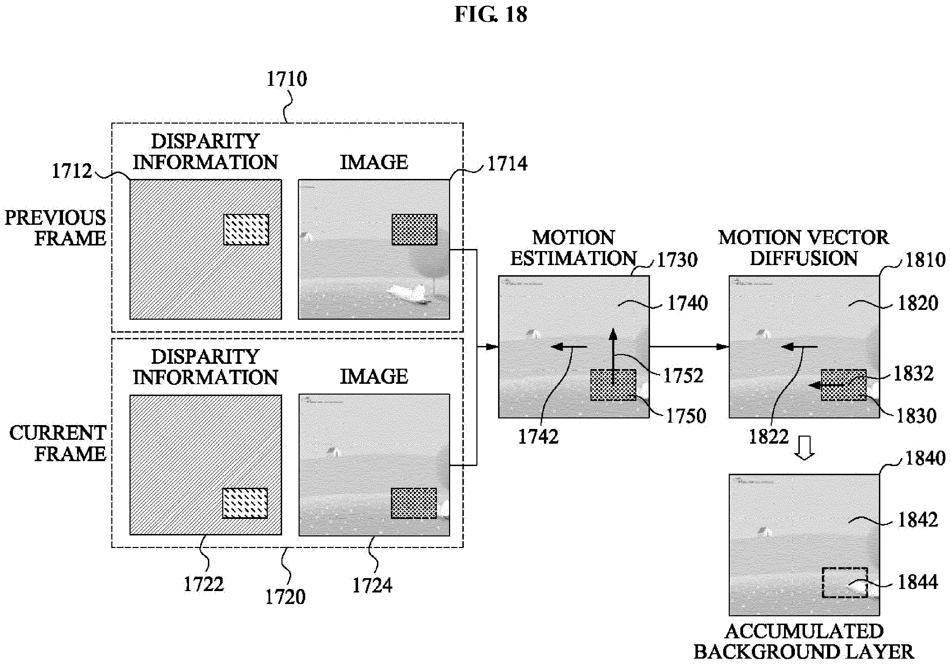

FIG. 18 illustrates an example describing diffusion of a motion vector, according to an example embodiment.

Motion vector diffusion may indicate excluding estimation of a motion vector with respect to a foreground and using a motion vector of a background adjacent to the foreground as the motion vector of the foreground.

Referring to FIG. 18, a motion vector diffusion applied view 1810 may include a background 1820 and a foreground 1830. An estimated motion vector 1822 of the background 1820 and a motion vector 1832 generated by a motion vector diffusion of the foreground 1830 are indicated. The motion vector 1832 of the foreground 1830 may be generated by diffusing the motion vector 1822 of the background 1820.

The motion vector 1832 may indicate a background in the standard viewpoint view 1710 of the previous frame. For example, the motion vector 1832 may indicate information associated with a background occluded by the foreground 1830 of the motion vector diffusion applied view 1810. Accordingly, the motion estimator 1210 may replace the foreground of the standard viewpoint view 1720 of the current frame with the background within the standard viewpoint view 1710 of the previous frame that is indicated by the motion vector 1832. An accumulated background layer 1840 may include a background 1842. A portion 1844 corresponding to the foreground 1830 of the motion vector diffusion applied view 1810 may also be a background. Through the aforementioned motion vector diffusion with respect to the foreground, the background layer accumulator 1250 may accumulate backgrounds of consecutive frames, having various motions, in the accumulated background layer 1840.

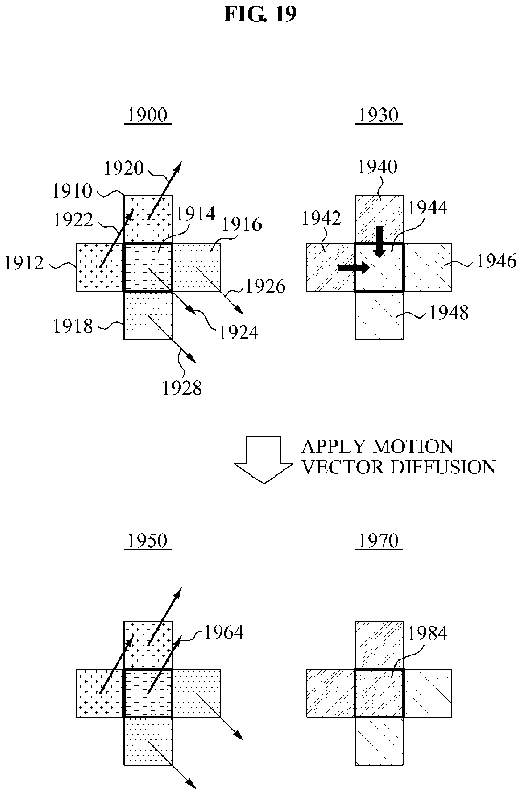

FIG. 19 illustrates an example describing diffusion of a motion vector between vectors, according to an example embodiment.

Referring to FIG. 19, first color information 1900 may include five blocks, for example, a first block 1910, a second block 1912, a third block 1914, a fourth block 1916, and a fifth block 1918, and estimated motion vectors 1920, 1922, 1924, 1926, and 1928 of the respective first block 1910, second block 1912, third block 1914, fourth block 1916, and fifth block 1918. First disparity information 1930 may include disparity information 1940, 1942, 1944, 1946, and 1948 of the respective first block 1910, second block 1912, third block 1914, fourth block 1916, and fifth block 1918.

The first block 1910 and the second block 1912 may correspond to background blocks representing a background, and the third block 1914, the fourth block 1916, and the fifth block 1918 may correspond to foreground blocks representing a foreground.

Second color information 1950 and second disparity information 1970 may show a result obtained by applying the motion vector diffusion to the first block 1910, the second block 1912, the third block 1914, the fourth block 1916, and the fifth block 1918.

A motion estimation may be applied to a foreground block adjacent to a background block. For example, the third block 1914 may be a foreground block adjacent to a background block. The motion estimator 1210 may assign a new motion vector 1964 to the third block 1914 by diffusing the motion vector 1920 of the first block 1910 or the motion vector 1922 of the second block 1912 to the third block 1914. The motion vector diffusion may indicate that a foreground block to which a motion vector is extended is considered as a background block occluded by a foreground. Accordingly, the foreground block to which the motion vector is extended may include disparity information indicating the background block. The motion estimator 1210 may assign, to the third block 1914, new disparity information 1984 indicating the background by diffusing disparity information 1940 of the first block 1910 or disparity information 1942 of the second block 1912 to the third block 1914.

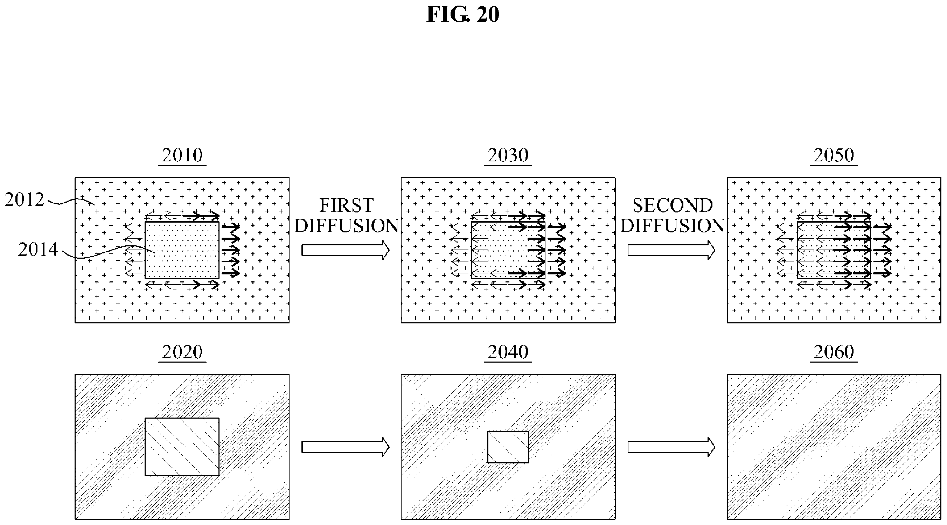

FIG. 20 illustrates an example describing iterative diffusion of a motion vector, according to an example embodiment.

A motion vector may be gradually diffused to blocks starting from a boundary foreground block or a pixel adjacent to a background and a foreground to an inner foreground block centered at the foreground.

FIG. 20 shows an image 2010 and disparity information 2020 of a before-diffusion initial standard viewpoint view. The image 2010 may include a foreground 2014 and a background 2012.

When diffusion is initially performed, an image 2030 and disparity information 2040 of an after-first diffusion standard viewpoint view may be generated. After the first diffusion, in the image 2030, a motion vector of a foreground block adjacent to a background block may be changed. That is, a motion vector of the background block may be diffused to the foreground block adjacent to the background block.

When the motion vector of the background block is diffused to the foreground block, the foreground block to which the motion vector is diffused may be determined as the background block. Accordingly, disparity information associated with the foreground block to which the motion vector is diffused may be changed to have the same value as disparity information of the adjacent background.

When the above diffusion is iterated, an image 2050 and disparity information 2060 of an after-second diffusion standard viewpoint view may be generated. After the second diffusion, in the image 2050, a motion vector of a foreground block adjacent to a block of which motion vector is changed due to the first diffusion may be changed. That is, the motion vector of the foreground block applied with the first diffusion may be diffused to the foreground block adjacent to the foreground block applied with the first diffusion.

After the second diffusion, the foreground block may not be present within the standard viewpoint view. Accordingly, diffusion may not be repeated any more.

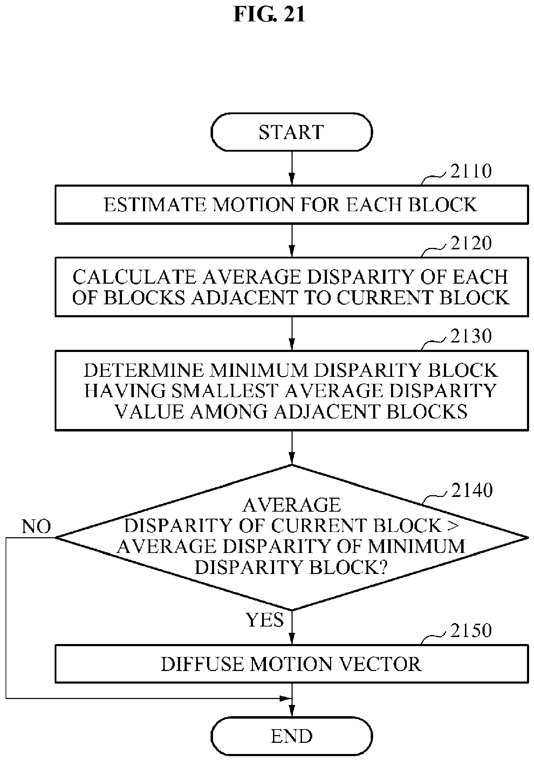

FIG. 21 illustrates a method of diffusing a motion vector, according to an example embodiment.

In operation 2110, the motion estimator 1210 may estimate a motion of each of blocks included in a view. A block may include at least one pixel. The block may include at least one pixel in a rectangular shape. The view may be a standard viewpoint view.

The block may be a foreground block or a background block. That is, in operation 2110, an initial value of a motion vector of each of the blocks may be generated by estimating the motion of each of the blocks.

In operations 2110 through 2150, the motion estimator 1210 may diffuse an estimated motion of a block corresponding to a background, among the blocks, to a block corresponding to the foreground, using a motion of the foreground block, corresponding to the foreground. Hereinafter, among the blocks included in the view, a block corresponding to the foreground will be referred to as a foreground block, and a block corresponding to the background will be referred to as a background block.

Hereinafter, a block to be applied by the motion vector diffusion will be referred to as a current block, and the current block may be a single block corresponding to the foreground, among the blocks included in the view. The current block may be a block adjacent to at least one background block, among foreground blocks.

In operation 2120, the motion estimator 1210 may calculate the average disparity of each of blocks adjacent to the current block. The blocks adjacent to the current block may include a block positioned above the current block, a block positioned below the current block, a block positioned on the left of the current block, and a block positioned on the right of the current block. The average disparity may indicate the average disparity value of at least one pixel included in an adjacent block.

In operation 2130, the motion estimator 1210 may determine a minimum disparity block with respect to the current block. The minimum disparity block may refer to a block having a smallest average disparity value among the blocks adjacent to the current block.

In operation 2140, the motion estimator 1210 may check whether the average disparity of the current block is greater than the average disparity of the minimum disparity block. When the average disparity of the current block is greater than the average disparity of the minimum disparity block, operation 2150 may be performed. When the average disparity of the current block is greater than the average disparity of the minimum disparity block, the current block may be relatively determined as the foreground block. The minimum disparity block may be determined as the background block. Accordingly, the motion vector of the minimum disparity block may be diffused to the current block.

On the contrary, when the average disparity of the current block is less than or equal to the average disparity of the minimum disparity block, the current block may be relatively determined as the background block and thus, there is no need to diffuse a motion vector of another block to the current block. Accordingly, when the average disparity of the current block is less than or equal to the average disparity of the minimum disparity block, the procedure may be terminated.

In operation 2150, the motion estimator 1210 may diffuse the motion vector of the minimum disparity block to the current vector. For example, the motion estimator 1210 may replace the motion vector of the current vector with the motion vector of the minimum disparity block.

Through operations 2110 to 2150, a motion vector may be diffused to a block corresponding to a foreground. Accordingly, the motion estimator 1210 may repeat operations 2110 through 2150 until there is no block corresponding to the foreground in the view. By repeating operations 2110 through 2150, the motion vector of the background block may be diffused even to foreground blocks that are not adjacent to the background block.

FIG. 22 illustrates an example comparing a result of inter-frame inpainting and a result of intra-frame inpainting, according to an example embodiment.

FIG. 22 shows a standard viewpoint view 2210 of a previous frame and a standard viewpoint view 2240 of a current frame. The standard viewpoint view 2210 of the previous frame may include disparity information 2220 and an image 2230. The standard viewpoint view 2240 of the current frame may include disparity information 2250 and an image 2260.

In this example, an accumulated background layer may be assumed to be generated based on the previous frame. For example, the standard viewpoint view 2210 of the previous frame may be determined as an accumulated background layer.

In the disparity information 2220 and the image 2230 included in the standard viewpoint view 2210 of the previous frame, a first search region may be indicated as a rectangular box. In the first search region, a source patch within the standard viewpoint view 2210 of the previous frame, that is, the accumulated background layer may be found when optimal patch search based inter-frame inpainting is employed.

In disparity information 2250 and the image 2260 included in the standard viewpoint view 2240 of the current frame, a second search region may be indicated as a rectangular box. In the second search region, a source patch within the standard viewpoint view 2240 of the current frame may be found when optimal patch search based inter-frame inpainting is employed.

Each of the first search region and the second search region may be adjacent to a hole to be recovered, or to a pixel corresponding to the hole.

FIG. 22 shows an initial standard viewpoint layer 2270, a first standard viewpoint layer 2280, and a second standard viewpoint layer 2290. The first standard viewpoint layer 2280 may be generated by applying the optimal patch search based inter-frame inpainting to thereby recover a hole within the initial standard viewpoint view 2270. The second standard viewpoint layer 2290 may be generated by applying the optimal patch search based intra-frame inpainting to thereby recover a hole within the initial standard viewpoint view layer 2270.

Referring to the standard viewpoint view 2210 of the previous frame and the standard viewpoint view 2240 of the current frame, a background may not be moved and a foreground may be moved to the left. For example, a background disclosed in the previous frame may be occluded by a foreground in the current frame. Accordingly, the hole within the initial standard viewpoint layer 2270 may be recovered using the previous frame, for example, inter-frame inpainting.

The first standard viewpoint layer 2280 applied by the inter-frame inpainting may have a more accurate result, with respect to hole recovery, than the second standard viewpoint layer 2290 applied by the intra-frame inpainting.

To determine which standard viewpoint layer between the first standard viewpoint layer 2280 applied by the inter-frame inpainting and the second standard viewpoint layer 2290 applied by the intra-frame inpainting more accurately shows a hole recovered result, the weight determining unit 1230 may compare the first search region and the second search region.

A first background ratio indicates a ratio of a background in the first search region, and a second background ratio indicates a ratio of a background in the second search region. In general, when a search region having a high background ratio is used, a hole may be further readily recovered.

To generate a final standard viewpoint layer, the weight determining unit 1230 may adaptively select a hole recovered result using inter-frame inpainting and a hole recovered result using intra-frame inpainting based on a background occlusion level in the first search region and a background occlusion level in the second search region. Here, the adaptive selecting may indicate selecting a value of the weight β determined, according to Equation 2.

When the first background ratio is greater than the second background ratio, the weight determining unit 1230 may set β to zero. Therefore, when the first background ratio is greater than the second background ratio, the hole recovery unit 1240 may recover a hole within an initial standard viewpoint layer 2270 using inter-frame inpainting.

On the contrary, when the first background ratio is less than the second background ratio, the weight determining unit 1230 may set β to '1'. Therefore, when the first background ratio is less than the second background ratio, the weight determining unit 1230 may recover a hole within the initial standard viewpoint layer 2270 using intra-frame inpainting.

When the first background ratio and the second background ratio are similar to each other, the hole recovery unit 1240 may set β to '0.5'. Therefore, when the first background ratio and the second background ratio are similar to each other, the hole recovery unit 1240 may generate a standard viewpoint layer by mixing a hole recovered result using inter-frame inpainting and a hole recovered result using intra-frame inpainting.

In FIG. 22, the first search region may not include a foreground and the second search region may include a foreground. That is, the first background ratio may be greater than the second background ratio. Accordingly, the first standard viewpoint layer 2280 may be determined to be more accurate than the second standard viewpoint layer 2290.

FIG. 23 illustrates an example comparing a result of inter-frame inpainting and a result of intra-frame inpainting, according to another example embodiment.

FIG. 23 shows a standard viewpoint view 2310 of a previous frame and a standard viewpoint view 2340 of a current frame. The standard viewpoint view 2310 of the previous frame may include disparity information 2320 and an image 2330. The standard viewpoint view 2340 of the current frame may include disparity information 2350 and an image 2360.

In this example, an accumulated background layer may be assumed to be generated based on the previous frame. For example, the standard viewpoint view 2310 of the previous frame may be determined as an accumulated background layer.

In the disparity information 2320 and the image 2330 included in the standard viewpoint view 2310 of the previous frame, a first search region may be indicated as a rectangular box.

The disparity information 2350 and the image 2360 included in the standard viewpoint view 2340 of the current frame, the second search region may be indicated as a rectangular box. Referring to the standard viewpoint view 2310 of the previous frame and the standard viewpoint view 2340 of the current frame, a background may be moved to the left. Therefore, the second search region may be moved to the right along a motion vector of the background compared to a search region in an initial standard viewpoint layer 2370. That is, a position of the second search region within the standard viewpoint view 2310 of the previous frame may be positioned relatively further to the right compared to a position of a search region within the initial standard viewpoint layer 2370. Here, the motion vector of the background may be estimated by a motion vector diffusion.

FIG. 23 shows the initial standard viewpoint layer 2370, a first standard viewpoint layer 2380, and a second standard viewpoint layer 2390. The first standard viewpoint layer 2380 may be generated by applying optimal patch search based inter-frame inpainting to thereby recover a hole within the initial standard viewpoint layer 2370. The second standard viewpoint layer 2390 may be generated by applying optimal search based intra-frame inpainting to thereby recover a hole within the initial standard viewpoint layer 2370.

Referring to the standard viewpoint view 2310 of the previous frame and the standard viewpoint view 2340 of the current frame, a background may be moved to the left and a foreground may be moved to the right. For example, a background occluded in the previous frame may appear in the current frame. Accordingly, the hole within the initial standard viewpoint layer 2370 may be recovered using the current frame, for example, by applying intra-frame inpainting. The second standard viewpoint layer 2390 applied by the intra-frame inpainting may have a more accurately hole recovered result than the first standard viewpoint layer 2380 applied by the inter-frame inpainting.

In FIG. 23, a background ratio in the second search region may be greater than a background ratio in the first search region. That is, the second background ratio may be greater than the first background ratio. Accordingly, the second standard viewpoint layer 2390 may be determined to be more accurate than the first standard viewpoint layer 2380.

FIG. 24 illustrates a method of updating an accumulated background layer, according to an example embodiment.

Operation 1360 of FIG. 13 may include operations 2410 through 2430 of FIG. 24.

In operation 2410, the background layer accumulator 1250 may determine whether a scene change has occurred in a current frame or a standard viewpoint view of the current frame. To quickly accumulate a background of the standard viewpoint layer to the accumulated background layer, and to quickly recover a hole within an initial standard viewpoint layer, a scene change may need to be detected.

When the scene change occurs, operation 2420 may be performed. On the contrary, when the scene change does not occur, operation 2430 may be performed. The background layer accumulator 1250 may determine whether the scene change has occurred, based on the determination result of the scene change determining unit 1220.

When the scene change occurs in the current frame, the background layer accumulator 1250 may initialize the accumulated background layer in operation 2420. When the scene change occurs, information associated with a background of a standard viewpoint layer of a previous frame may be inappropriate to recover a hole within an initial standard viewpoint layer of a subsequent frame of the current frame. Accordingly, the accumulated background layer may include only information associated with the background of the standard viewpoint layer of the current frame. Accordingly, the accumulated background layer may be initialized prior to operation 2430.

In operation 2430, the background layer accumulator 1250 may combine the background of the standard viewpoint layer of the current frame with the accumulated background layer.

The background of the standard viewpoint layer of the current frame may be combined with the accumulated background layer for each block or each pixel.

With respect to a first block within the standard viewpoint layer, the background layer accumulator 1250 may search for a second block within an accumulated background layer corresponding to the first block using a motion vector of the first block.

The background layer accumulator 1250 may compare the average disparity of the first block and the average disparity of the second block. The background layer accumulator 1250 may use color values of a block having a relatively low disparity between the first block and the second block, for example, color values of pixels included in the block, as color values of the second block of the accumulated background layer with respect to the current frame. When the average disparity of the first block is lower than the average disparity of the second block, the background layer accumulator 1250 may copy color values of the first block to color values of the second block. Accordingly, when a background region having a relatively low disparity appears in the standard viewpoint layer of the current frame, the background layer accumulator 1250 may use the background region as a portion of the accumulated background layer. When the background region having the relatively low disparity does not appear in the standard viewpoint layer of the current frame, the background layer accumulator 1250 may use the accumulated background layer used when processing the current frame, to process a subsequent frame.

FIG. 25 illustrates an example describing a process of accumulating a background of a standard viewpoint of layer to an accumulated background layer, according to an example embodiment.

In FIG. 25, first line images may indicate disparity information of standard viewpoint layers of a (t-N frame) through a (t-N+3) frame, respectively. Second line images may indicate standard viewpoint layers of the (t-N) frame to the (t-N+3) frame, respectively. Third line images may indicate accumulated background layers that are generated while processing the (t-N) frame to the (t-N+3) frame, respectively. Fourth line images may indicate disparity information of the accumulated background layers, respectively.

In frames up to the (t-N+1) frame, a background may not be moved and objects of a foreground may be moved to the right.

In the (t-N) frame, the hole recovery unit 1240 may compare a standard viewpoint layer and an accumulated background layer updated in a previous frame. The hole recovery unit 1240 may accumulate, as a new accumulated background layer, a block having a smaller average disparity between a first block within the standard viewpoint layer and a second block within the accumulated background layer corresponding to the first layer, for each block or each pixel. That is, when one of the first block and the second block is a foreground block and another one thereof is a background block, the background block may be accumulated as a portion of a background layer. Accordingly, an accumulated background layer in the (t-1) frame may include the more number of background blocks than an accumulated background layer in the (t-N-1) frame.

Even in the (t-N+1) frame to the (t-N+3) frame, the aforementioned comparison and accumulation may be applied. For example, in the (t-N+1) frame, the accumulated background layer updated in the (t-N) frame may be compared with the standard viewpoint layer.

In frames from the (t-N+2) frame, a background may be moved. The background layer accumulator 1250 may add information associated with an accumulated background layer updated in a previous frame, to a standard viewpoint layer of a current frame, using a motion vector estimated by motion diffusion. Information associated with the background of the standard viewpoint layer of the current frame may be accumulatively added along the motion of the background. Accordingly, information associated with a background corresponding to a region not observed in the standard viewpoint layer of the current frame may be present within the accumulated background layer. Accordingly, the hole recovery unit 1240 may use information associated with the background within the standard viewpoint layer of the previous frame, not observed at a viewpoint of the current frame, to recover a hole within an initial standard viewpoint of the current frame.

Due to the above accumulation, information associated with a background that may not be used in the standard viewpoint layer of the current frame due to occlusion may also remain in the accumulated background layer. That is, information associated with the background may be gradually accumulated within the accumulated background layer. For example, an accumulated background layer updated in the (t-N+1) fame and an accumulated background layer updated in a subsequent frame of the (t-N+1) frame may include information associated with all of the backgrounds without any occluded region.

The hole recovery unit 1240 may use accumulated information associated with the background within the accumulated background layer through inter-frame inpainting to recover a hole within an initial standard viewpoint layer of a subsequent frame. Using accumulated information associated with the background, it is possible to enhance a hole recovery performance, and to maintain the spatial-temporal consistency for hole recovery.

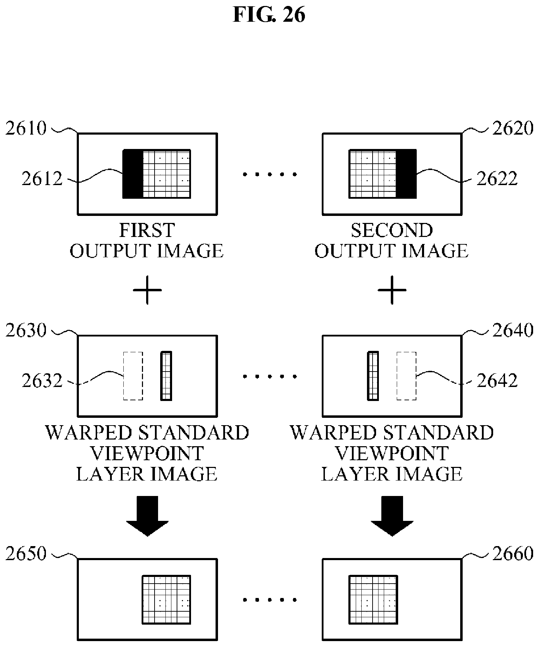

FIG. 26 illustrates an example describing a process of generating an output view and recovering a hole of an output view, according to an example embodiment.

The output view generator 250 may generate at least one output view using at least one input view. An output view may include an output image. The output image may indicate an image observed at a viewpoint of the output view. In FIG. 26, a first output view 2610 and a second output view 2620 may be generated as at least one output view.

Reference views may indicate views selected to generate a predetermined output view of at least one input view. For example, when an output image is generated by interpolation, the output view generator 250 may select, as reference views, two input views most adjacent to a viewpoint of the output image on the left and right. When an output image is generated by extrapolation, the output view generator 250 may select, as a reference view, a single input view, for example, an outermost view that is most adjacent to the viewpoint of the output image.

In operation 350 of FIG. 3, the output view generator 250 may generate the first output image 2610 by warping a reference view image to a viewpoint of the first output image 2610 based on disparity information associated with the reference view. The output view generator 250 may generate the second output image 2620 by warping a reference view image to a viewpoint of the second output image 2620 based on disparity information associated with the reference view.

Due to a viewpoint difference between the at least one input view and the output view, a hole may occur in the output viewpoint image.

In operation 360 of FIG. 3, the output view hole recovery unit 260 may generate warped standard viewpoint layer images 2630 and 2640 of an output viewpoint for the first output image 2610 and the second output image 2620, respectively. That is, the output view hole recovery unit 260 may generate the standard viewpoint layer images 2630 and 2640 by warping an image of a standard viewpoint layer based on disparity information associated with the standard viewpoint layer. Warping of the standard viewpoint layer may be determined to diffuse information, used for hole recovery within the standard viewpoint layer, to each output viewpoint.

In operation 360 of FIG. 3, the output view hole recovery unit 260 may recover a hole 2612 within the first output image 2610 using the standard viewpoint layer image 2630 warped to the viewpoint of the first output image 2610. To recover the hole 2612, the output view hole recovery unit 260 may use a region 2632 of the standard viewpoint layer image 2630 corresponding to the hole 2612. The output view hole recovery unit 260 may recover a hole 2622 within the second output view 2620 using the standard viewpoint layer 2640 warped to the viewpoint of the second output view 2620. To recover the hole 2622, the output view hole recovery unit 260 may use a region 2642 of the standard viewpoint layer image 2640 corresponding to the hole 2622.

In operation 360 of FIG. 3, the output view hole recovery unit 260 may generate a hole recovered output image 2650 or 2660 by synthesizing the first output image 2610 or the second output image 2620 and the standard viewpoint layer image 2630 or 2640 that is warped to the viewpoint of the first output image 2610 or the second output image 2620.

The output view hole recovery unit 260 may determine the warped standard viewpoint layer image as background information corresponding to the viewpoint of the hole-recovered output image. For example, the output view hole recovery unit 260 may use an image of the standard viewpoint layer as a background of the hole recovered output image through warping.

When holes of output images are recovered using different data or using different schemes, spatial and temporal inconsistency may occur in the hole recovery.

By collectively employing the aforementioned standard viewpoint layer for a hole recovery within an output image, it is possible to enhance the spatial and temporal consistency of output views having different viewpoints and different frames.

The embodiments of the present disclosure may be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Further, according to an aspect of the embodiments, any combinations of the described features, functions and/or operations can be provided.

Moreover, the image processing apparatus may include at least one processor to execute at least one of the above-described units and methods.

Although embodiments have been shown and described, it would be appreciated by those skilled in the art that changes may be made in these embodiments without departing from the invention, the scope of which is defined by the appended claims.

**Claims**

1. An image processing method for a multi-view rendering method capable of providing spatial-temporal consistency, comprising:

    determining a standard viewpoint (310) as a center between viewpoints of two input views that are selected from among at least two input views;
    generating a standard viewpoint view with respect to the determined standard viewpoint (320), wherein the standard viewpoint view corresponds to a current frame in a predetermined time t or a t$^{th}$ frame, using the at least two input views corresponding to said current frame, each input view comprising an image and disparity information;
    generating an initial standard viewpoint layer of the current frame (330) by replacing a region within the standard viewpoint view of the current frame with a hole, wherein the region within the standard viewpoint view corresponds to a region that appears as a hole by warping the standard viewpoint view to at least one other viewpoint;
    generating a standard viewpoint layer of the current frame (340) by recovering the hole within the initial standard viewpoint layer, based on a standard viewpoint layer of at least one previous frame of the current frame and the initial standard viewpoint layer;
    generating an output view (350), corresponding to said at least one other viewpoint, wherein the output view includes an interpolated view that is generated by interpolating at least two input views among said at least two input views or an extrapolated view that is generated by extrapolating at least one input view among said at least two input views; and
    recovering a hole within the output view using the standard viewpoint layer of the current frame (360).

2. The method of claim 1, wherein the standard viewpoint is a viewpoint of a center input view of the at least two input views.

3. The method of claim 1 or 2, wherein the generating the standard viewpoint layer of the current frame comprises:

    recovering the hole within the initial standard viewpoint layer by applying at least one of inter-frame inpainting that recovers the hole within the initial standard viewpoint layer, based on an accumulated background layer and intra-frame inpainting that recovers the hole within the initial standard viewpoint layer, based on the initial standard viewpoint layer; and
    updating the accumulated background layer using the standard viewpoint layer of the current frame,
    wherein the accumulated background layer is generated by accumulating a background of a standard viewpoint layer of each of at least one previous frame of the current frame; and
    wherein the updating comprises initializing the accumulated background layer when a scene change occurs in the current frame.

4. The method of claim 3, wherein the hole within the initial standard viewpoint layer is recovered by optimal patch search based inpainting that initially performs a hole recovery from a structure of a background of the initial standard viewpoint layer.

**5.** The method of claim 3 or 4, wherein:

the generating the standard viewpoint layer of the current frame comprises determining a first weight and a second weight,

the hole within the initial standard viewpoint layer is recovered by summing a result obtained by applying the first weight to a first result and a result obtained by applying the second weight to a second result,

the first result is obtained when the hole within the initial standard viewpoint layer is recovered by applying the inter-frame inpainting, and

the second result is obtained when the hole within the initial standard viewpoint layer is recovered by applying the intra-frame inpainting.

**6.** The method of any of the claims 3 - 5, wherein:

a first background ratio is a ratio of a background within a first search region and a second background ratio is a ratio of a background within a second search region,

the first search region is a region in which a source patch within the accumulated background layer is searched when optimal patch search based inter-frame inpainting is applied, and the second search region is a region in which a source patch within the standard viewpoint view is searched for when optimal patch search based intra-frame inpainting is applied, and

when the first background ratio is greater than the second background ratio, the hole within the initial standard viewpoint layer is recovered by the inter-frame inpainting, and when the first background ratio is less than the second background ratio, the hole within the initial standard viewpoint layer is recovered by the intra-frame inpainting;

wherein when the first background ratio and the second background ratio are similar to each other, the standard viewpoint layer is preferably generated by mixing the hole recovered using inter-frame inpainting and the hole recovered using intra-frame inpainting.

**7.** The method of any of the claims 3 - 6, wherein:

the generating the standard viewpoint layer of the current frame further comprises estimating a motion of the standard viewpoint of the current frame,

the estimating comprises:

estimating a motion of each block, among blocks, within the standard viewpoint view; and

diffusing an estimated motion of a block corresponding to a background, among the blocks, to a motion of a block corresponding to a foreground, among the blocks.

**8.** A non-transitory computer-readable medium comprising a program for instructing a computer to perform the method of any of the claims 1-7.

**9.** An image processing apparatus for implementing a multi-view rendering method capable of providing spatial-temporal consistency, comprising:

a standard viewpoint determining unit (210) to determine a standard viewpoint as being a center between viewpoints of two input views that are selected from among at least two input views;

a standard viewpoint view generator (220) to generate a standard viewpoint view (430, 540, 720) with respect to the determined standard viewpoint, wherein the standard viewpoint view corrresponds to a current frame in a predetermined time t or to a $t^{th}$ frame, using the at least two input views corresponding to said current frame, each input view comprising an image and disparity information;

an initial standard viewpoint layer generator (230) to generate an initial standard viewpoint layer of the current frame by replacing a region within the standard viewpoint view of the current frame with a hole, the region within the standard viewpoint view corresponding to a region that appears as a hole by warping the standard viewpoint view to at least one other viewpoint;

a standard viewpoint layer generator (240) to generate a standard viewpoint layer of the current frame by recovering the hole within the initial standard viewpoint layer, based on a standard viewpoint layer of at least one previous frame of the current frame and the initial standard viewpoint layer;

an output view generator (250) to generate an output view, corresponding to said at least one other viewpoint, wherein the output view includes an interpolated view that is generated by interpolating-at least two input views among said at least two input views or an extrapolated view that is generated by extrapolating at least one input view among said at least two input views; and

an output view hole recovery unit (260) to recover a hole within the output viewpoint image using the standard viewpoint layer of the current frame.

10. The image processing apparatus of claim 9, wherein the standard viewpoint is a viewpoint of a center input view of the at least two input views.

11. The image processing apparatus of claims 9 or 10, wherein the standard viewpoint layer generator (240) comprises:

a hole recovery unit to recover the hole within the initial standard viewpoint layer by applying at least one of inter-frame inpainting that recovers the hole within the initial standard viewpoint layer, based on an accumulated background layer and intra-frame inpainting that recovers the hole within the initial standard viewpoint layer, based on the initial standard viewpoint layer; and

a background layer accumulator to update the accumulated background layer, using the standard viewpoint layer of the current frame,

wherein the accumulated background layer is generated by accumulating a background of a standard viewpoint layer of each of at least one previous frame of the current frame,

wherein the background layer accumulator preferably initializes the accumulated background layer when a scene change occurs in the current frame.

12. The image processing apparatus of claim 11, wherein the hole recovery unit (1240) recovers the hole within the initial standard viewpoint layer by optimal patch search based inpainting that initially performs a hole recovery from a structure of a background of the initial standard viewpoint layer.

13. The image processing apparatus of claim 11 or 12, wherein:

the standard viewpoint view generator (240) comprises a weight determining unit (1230) to determine a first weight and a second weight,

the hole recovery unit (1240) recovers the hole within the initial standard viewpoint layer by summing a result obtained by applying the first weight to a first result and a result obtained by applying the second weight to a second result,

the first result is obtained when the hole within the initial standard viewpoint layer is recovered by applying the inter-frame inpainting, and

the second result is obtained when the hole within the initial standard viewpoint layer is recovered by applying the intra-frame inpainting.

14. The image processing apparatus of any of the claims 11 - 13, wherein:

a first background ratio is a ratio of a background within a first search region and a second background ratio is a ratio of a background within a second search region,

the first search region is a region in which a source patch within the accumulated background layer is searched for when optimal patch search based inter-frame inpainting is applied, and the second search region is a region in which a source patch within the standard viewpoint view is searched when optimal patch search based intra-frame inpainting is applied, and

when the first background ratio is greater than the second background ratio, the hole recovery unit recovers the hole within the initial standard viewpoint layer by the inter-frame inpainting, and when the first background ratio is less than the second background ratio, the hole recovery unit recovers the hole within the initial standard viewpoint layer by the intra-frame inpainting;

wherein when the first background ratio and the second background ratio are similar to each other, the standard viewpoint layer is preferably generated by mixing the hole recovered using inter-frame inpainting and the hole recovered using intra-frame inpainting.

15. The image processing apparatus of any of the claims 11 - 14, wherein:

the standard viewpoint layer generator (240) further comprises a motion estimator (1210) to estimate a motion of the standard viewpoint of the current frame, and

the motion estimator (1210) estimates a motion of each block, among blocks, within the standard viewpoint view, and diffuses an estimated motion of a block corresponding to a background, among the blocks, to a motion of a block corresponding to a foreground, among the blocks.

**Patentansprüche**

1. Bildverarbeitungsverfahren für ein Verfahren zur Wiedergabe einer Mehrfachansicht, das in der Lage ist, eine räumlich-zeitliche Konsistenz bereitzustellen, wobei das Verfahren umfasst:

   Bestimmen (310) eines Standard-Ansichtspunkts als Mittelpunkt zwischen Ansichtspunkten von zwei Eingabeansichten, die aus mindestens zwei Eingabeansichten ausgewählt werden;
   Erzeugen (320) einer Standard-Ansichtspunkt-Ansicht in Bezug auf den bestimmten Standard-Ansichtspunkt, wobei die Standard-Ansichtspunkt-Ansicht einem aktuellen Einzelbild in einer vorbestimmten Zeit t oder einem t-ten Einzelbild entspricht, und zwar unter Verwendung der mindestens zwei dem aktuellen Einzelbild entsprechenden Eingabeansichten, wobei jede Eingabeansicht ein Bild und Disparitätsinformationen umfasst;
   Erzeugen (330) einer anfänglichen Standard-Ansichtspunkt-Schicht des aktuellen Einzelbildes durch Ersetzen eines Bereichs innerhalb der Standard-Ansichtspunkt-Ansicht des aktuellen Einzelbildes durch ein Loch, wobei der Bereich innerhalb der Standard-Ansichtspunkt-Ansicht einem Bereich entspricht, der als ein Loch erscheint, indem die Standard-Ansichtspunkt-Ansicht auf mindestens einen anderen Ansichtspunkt verzerrt wird;
   Erzeugen (340) einer Standard-Ansichtspunkt-Schicht des aktuellen Einzelbildes durch Wiederherstellen des Lochs in der anfänglichen Standard-Ansichtspunkt-Schicht basierend auf einer Standard-Ansichtspunkt-Schicht aus mindestens einem dem aktuellen Einzelbild vorhergehenden Einzelbild und basierend auf der anfänglichen Standard-Ansichtspunkt-Schicht;
   Erzeugen (350) einer Ausgabeansicht, die dem mindestens einen anderen Ansichtspunkt entspricht, wobei die Ausgabeansicht eine interpolierte Ansicht enthält, die durch Interpolieren von mindestens zwei Eingabeansichten aus den mindestens zwei Eingabeansichten erzeugt wird, oder eine extrapolierte Ansicht enthält, die durch Extrapolieren von mindestens einer Eingabeansicht aus den mindestens zwei Eingabeansichten erzeugt wird; und
   Wiederherstellen (360) eines Lochs in der Ausgabeansicht mithilfe der Standard-Ansichtspunkt-Schicht des aktuellen Einzelbildes.

2. Verfahren nach Anspruch 1, wobei der Standard-Ansichtspunkt ein Ansichtspunkt einer Mitten-Eingabeansicht der mindestens zwei Eingangsansichten ist.

3. Verfahren nach Anspruch 1 oder 2, wobei das Erzeugen der Standard-Ansichtspunkt-Schicht des aktuellen Einzelbildes umfasst:

   Wiederherstellen des Lochs in der anfänglichen Standard-Ansichtspunkt-Schicht durch Anwenden von Inter-Frame-Bildfehlerkorrektur, die das Loch in der anfänglichen Standard-Ansichtspunkt-Schicht basierend auf einer akkumulierten Hintergrundschicht wiederherstellt, und/oder Intra-Frame-Bildfehlerkorrektur, die das Loch in der anfänglichen Standard-Ansichtspunkt-Schicht basierend auf der anfänglichen Standard-Ansichtspunkt-Schicht wiederherstellt; und
   Aktualisieren der akkumulierten Hintergrundschicht unter Verwendung der Standard-Ansichtspunkt-Schicht des aktuellen Einzelbildes,
   wobei die akkumulierte Hintergrundschicht durch Akkumulieren eines Hintergrunds einer Standard-Ansichtspunkt-Schicht von jedem aus der Menge von wenigstens einem dem aktuellen Einzelbild vorhergegangenen Einzelbild erzeugt wird; und
   wobei das Aktualisieren umfasst: Initialisieren der akkumulierten Hintergrundschicht, wenn in dem aktuellen Einzelbild ein Szenenwechsel stattfindet.

4. Verfahren nach Anspruch 3, wobei das Loch in der anfänglichen Standard-Ansichtspunkt-Schicht wiederhergestellt wird durch Bildfehlerkorrektur basierend auf der Suche nach einem optimalen Patch, bei der eine Lochwiederherstellung aus einer Struktur eines Hintergrunds der anfänglichen Standard-Ansichtspunkt-Schicht anfänglich durchgeführt wird.

5. Verfahren nach Anspruch 3 oder 4, wobei:

das Erzeugen der Standard-Ansichtspunkt-Schicht des aktuellen Einzelbildes das Bestimmen einer ersten Gewichtung und einer zweiten Gewichtung umfasst,

das Loch innerhalb der anfänglichen Standard-Ansichtspunkt-Schicht wiederhergestellt wird durch Addieren eines Ergebnisses, das durch Anwenden der ersten Gewichtung auf ein erstes Ergebnis erhalten wird, mit einem Ergebnis, das durch Anwenden der zweiten Gewichtung auf ein zweites Ergebnis erhalten wird,

das erste Ergebnis erhalten wird, wenn das Loch innerhalb der anfänglichen Standard-Ansichtspunkt-Schicht durch Anwenden der Inter-Frame-Bildfehlerkorrektur wiederhergestellt wird, und

das zweite Ergebnis erhalten wird, wenn das Loch innerhalb der anfänglichen Standard-Ansichtspunkt-Schicht durch Anwenden der Intra-Frame-Bildfehlerkorrektur wiederhergestellt wird.

6. Verfahren nach einem der Ansprüche 3 bis 5, wobei:

ein erstes Hintergrundverhältnis ein Verhältnis eines Hintergrunds innerhalb eines ersten Suchbereichs ist und ein zweites Hintergrundverhältnis ein Verhältnis eines Hintergrunds innerhalb eines zweiten Suchbereichs ist, der erste Suchbereich ein Bereich ist, in dem ein Quellpatch innerhalb der akkumulierten Hintergrundschicht gesucht wird, wenn eine Inter-Frame-Bildfehlerkorrektur basierend auf der Suche nach einem optimalen Patch durchgeführt wird, und der zweite Suchbereich ein Bereich ist, in dem ein Quellpatch innerhalb der Standard-Ansichtspunkt-Ansicht gesucht wird, wenn eine Intra-Frame-Bildfehlerkorrektur basierend auf der Suche nach einem optimalen Patch durchgeführt wird, und

wenn das erste Hintergrundverhältnis größer als das zweite Hintergrundverhältnis ist, das Loch innerhalb der anfänglichen Standard-Ansichtspunkt-Schicht durch die Inter-Frame-Bildfehlerkorrektur wiederhergestellt wird, und wenn das erste Hintergrundverhältnis kleiner als das zweite Hintergrundverhältnis ist, das Loch innerhalb der anfänglichen Standard-Ansichtspunkt-Schicht durch die Intra-Frame-Bildfehlerkorrektur wiederhergestellt wird;

wobei, wenn das erste Hintergrundverhältnis und das zweite Hintergrundverhältnis gleich sind, die Standard-Ansichtspunkt-Schicht vorzugsweise durch Mischen des unter Verwendung von Inter-Frame-Bildfehlerkorrektur wiederhergestellten Lochs mit dem unter Verwendung von Intra-Frame-Bildfehlerkorrektur wiederhergestellten Lochs erzeugt wird.

7. Verfahren nach einem der Ansprüche 3 bis 6, wobei:

das Erzeugen der Standard-Ansichtspunkt-Schicht des aktuellen Einzelbildes weiterhin das Schätzen einer Bewegung des Standard-Ansichtspunkts des aktuellen Einzelbildes umfasst,
das Schätzen umfasst:

Schätzen einer Bewegung jedes Blocks aus einer Menge von Blöcken innerhalb der Standard-Ansichtspunkt-Ansicht; und
Verbreiten einer geschätzten Bewegung eines einem Hintergrund entsprechenden Blocks aus der Menge von Blöcken auf eine Bewegung eines einem Vordergrund entsprechenden Blocks aus der Menge von Blöcken.

8. Nicht flüchtiges, computerlesbares Medium, das ein Programm umfasst, welches einen Computer anweist, das Verfahren nach einem der Ansprüche 1 bis 7 auszuführen.

9. Bildverarbeitungsvorrichtung zur Umsetzung eines Verfahrens zur Wiedergabe einer Mehrfachansicht, das in der Lage ist, eine räumlich-zeitliche Konsistenz bereitzustellen, wobei die Vorrichtung umfasst:

eine Standard-Ansichtspunkt-Bestimmungseinheit (210) zum Bestimmen eines Standard-Ansichtspunkts als Mittelpunkt zwischen Ansichtspunkten von zwei Eingabeansichten, die aus mindestens zwei Eingabeansichten ausgewählt werden;
eine Standard-Ansichtspunkt-Ansicht-Erzeugungseinrichtung (220) zum Erzeugen einer Standard-Ansichtspunkt-Ansicht (430, 540, 720) in Bezug auf den bestimmten Standard-Ansichtspunkt,
wobei die Standard-Ansichtspunkt-Ansicht einem aktuellen Einzelbild in einer vorbestimmten Zeit t oder einem t-ten Einzelbild entspricht, und zwar unter Verwendung der mindestens zwei dem aktuellen Einzelbild entsprechenden Eingabeansichten, wobei jede Eingabeansicht ein Bild und Disparitätsinformationen umfasst;
eine anfängliche-Standard-Ansichtspunkt-Schicht-Erzeugungseinrichtung (230) zum Erzeugen einer anfänglichen Standard-Ansichtspunkt-Schicht des aktuellen Einzelbildes durch Ersetzen eines Bereichs in der Standard-Ansichtspunkt-Ansicht des aktuellen Einzelbildes durch ein Loch, wobei der Bereich in der Standard-Ansichtspunkt-Ansicht einem Bereich entspricht, der als ein Loch erscheint, indem die Standard-Ansichtspunkt-Ansicht auf mindestens einen anderen Ansichtspunkt verzerrt wird; eine Standard-Ansichtspunkt-Schicht-Erzeugungseinrichtung (240) zum Erzeugen einer Standard-Ansichtspunkt-Schicht des aktuellen Einzelbildes durch Wiederherstellen des Lochs in der anfänglichen Standard-Ansichtspunkt-Schicht basierend auf einer Standard-Ansichtspunkt-Schicht aus mindestens einem dem aktuellen Einzelbild vorhergehenden Einzelbild und basierend auf der anfänglichen Standard-Ansichtspunkt-Schicht; eine Ausgabeansicht-Erzeugungseinrichtung (250) zum Erzeugen einer Ausgabeansicht, die dem mindestens einen anderen Ansichtspunkt entspricht, wobei die Ausgabeansicht eine interpolierte Ansicht enthält, die durch Interpolieren von mindestens zwei Eingabeansichten aus den mindestens zwei Eingabeansichten erzeugt wird, oder eine extrapolierte Ansicht enthält, die durch Extrapolieren von mindestens einer Eingabeansicht aus den mindestens zwei Eingabeansichten erzeugt wird; und eine Ausgabeansichtsloch-Wiederherstellungseinheit (260) zum Wiederherstellen eines Lochs innerhalb eines Ausgabeansichtspunktbildes unter Verwendung der Standard-Ansichtspunkt-Schicht des aktuellen Einzelbildes.

10. Bildverarbeitungsvorrichtung nach Anspruch 9, wobei der Standard-Ansichtspunkt ein Ansichtspunkt einer Mitten-Eingabeansicht der mindestens einen Eingangsansicht ist.

11. Bildverarbeitungsvorrichtung nach Anspruch 9 oder 10, wobei die Standard-Ansichtspunkt-Schicht-Erzeugungseinrichtung (240) umfasst:

eine Lochwiederherstellungseinheit zum Wiederherstellen des Lochs in der anfänglichen Standard-Ansichtspunkt-Schicht durch Anwenden von Inter-Frame-Bildfehlerkorrektur, die das Loch in der anfänglichen Standard-Ansichtspunkt-Schicht basierend auf einer akkumulierten Hintergrundschicht wiederherstellt, und/oder Intra-Frame-Bildfehlerkorrektur, die das Loch in der anfänglichen Standard-Ansichtspunkt-Schicht basierend auf der anfänglichen Standard-Ansichtspunkt-Schicht wiederherstellt; und einen Hintergrundschichtakkumulator zum Aktualisieren der akkumulierten Hintergrundschicht unter Verwendung der Standard-Ansichtspunkt-Schicht des aktuellen Einzelbildes, wobei die akkumulierte Hintergrundschicht durch Akkumulieren eines Hintergrunds einer Standard-Ansichtspunkt-Schicht von jedem aus der Menge von wenigstens einem dem aktuellen Einzelbild vorhergegangenen Einzelbild erzeugt wird; und wobei der Hintergrundschichtakkumulator vorzugsweise die akkumulierte Hintergrundschicht initialisiert, wenn in dem aktuellen Einzelbild einen Szenenwechsel stattfindet.

12. Bildverarbeitungsvorrichtung nach Anspruch 11, wobei die Lochwiederherstellungseinheit (1240) das Loch in der anfänglichen Standard-Ansichtspunkt-Schicht wiederherstellt durch Bildfehlerkorrektur basierend auf der Suche nach einem optimalen Patch, bei der eine Lochwiederherstellung aus einer Struktur eines Hintergrunds der anfänglichen Standard-Ansichtspunkt-Schicht anfänglich durchgeführt wird.

13. Bildverarbeitungsvorrichtung nach Anspruch 11 oder 12, wobei:

die Standard-Ansichtspunkt-Ansicht-Erzeugungseinrichtung (240) eine Gewichtungsbestimmungseinheit (1230) zum Bestimmen einer ersten Gewichtung und einer zweiten Gewichtung umfasst, die Lochwiederherstellungseinheit (1240) das Loch in der anfänglichen Standard-Ansichtspunkt-Schicht wiederherstellt durch Addieren eines Ergebnisses, das durch Anwenden der ersten Gewichtung auf ein erstes Ergebnis erhalten wird, mit einem Ergebnis, das durch Anwenden der zweiten Gewichtung auf ein zweites Ergebnis erhalten wird, das erste Ergebnis erhalten wird, wenn das Loch in der anfänglichen Standard-Ansichtspunkt-Schicht durch Anwenden der Inter-Frame-Bildfehlerkorrektur wiederhergestellt wird, und das zweite Ergebnis erhalten wird, wenn das Loch in der anfänglichen Standard-Ansichtspunkt-Schicht durch Anwenden der Intra-Frame-Bildfehlerkorrektur wiederhergestellt wird.

14. Bildverarbeitungsvorrichtung nach einem der Ansprüche 11 bis 13, wobei:

ein erstes Hintergrundverhältnis ein Verhältnis eines Hintergrunds innerhalb eines ersten Suchbereichs ist und ein zweites Hintergrundverhältnis ein Verhältnis eines Hintergrunds innerhalb eines zweiten Suchbereichs ist, der erste Suchbereich ein Bereich ist, in dem ein Quellpatch innerhalb der akkumulierten Hintergrundschicht gesucht wird, wenn eine Inter-Frame-Bildfehlerkorrektur basierend auf der Suche nach einem optimalen Patch durchgeführt wird, und der zweite Suchbereich ein Bereich ist,

in dem ein Quellpatch innerhalb der Standard-Ansichtspunkt-Ansicht gesucht wird, wenn eine Intra-Frame-Bildfehlerkorrektur basierend auf der Suche nach einem optimalen Patch durchgeführt wird, und

wenn das erste Hintergrundverhältnis größer als das zweite Hintergrundverhältnis ist, die Lochwiederherstellungseinheit das Loch innerhalb der anfänglichen Standard-Ansichtspunkt-Schicht durch die Inter-Frame-Bildfehlerkorrektur wiederherstellt, und wenn das erste Hintergrundverhältnis kleiner als das zweite Hintergrundverhältnis ist, die Lochwiederherstellungseinheit das Loch innerhalb der anfänglichen Standard-Ansichtspunkt-Schicht durch die Intra-Frame-Bildfehlerkorrektur wiederherstellt;

wobei, wenn das erste Hintergrundverhältnis und das zweite Hintergrundverhältnis gleich sind, die Standard-Ansichtspunkt-Schicht vorzugsweise durch Mischen des unter Verwendung von Inter-Frame-Bildfehlerkorrektur wiederhergestellten Lochs mit dem unter Verwendung von Intra-Frame-Bildfehlerkorrektur wiederhergestellten Lochs erzeugt wird.

**15.** Bildverarbeitungsvorrichtung nach einem der Ansprüche 11 bis 14, wobei:

die Standard-Ansichtspunkt-Ansicht-Erzeugungseinrichtung (240) weiterhin eine Bewegungsschätzeinrichtung (1210) zum Schätzen einer Bewegung des Standard-Ansichtspunktes des aktuellen Einzelbildes umfasst, und die Bewegungsschätzeinrichtung (1210) eine Bewegung jedes Blocks aus einer Menge von Blöcken innerhalb der Standard-Ansichtspunkt-Ansicht schätzt und eine geschätzte Bewegung eines einem Hintergrund entsprechenden Blocks aus der Menge von Blöcken auf eine Bewegung eines einem Vordergrund entsprechenden Blocks aus der Menge von Blöcken verbreitet.

## Revendications

**1.** Procédé de traitement d'image pour un procédé de rendu multivue apte à assurer une cohérence spatio-temporelle, comprenant :

la détermination (310) d'un point de vue standard comme étant un centre entre les points de vue de deux vues d'entrée choisies parmi au moins deux vues d'entrée ;

la génération (320) d'une vue à point de vue standard eu égard au point de vue standard déterminé, ladite vue à point de vue standard correspondant à une trame actuelle à un instant t prédéterminé ou à une $t^{\text{ième}}$ trame, au moyen des au moins deux vues d'entrée correspondant à ladite trame actuelle, chaque vue d'entrée comprenant une image et des informations de disparité ;

la génération (330) d'une couche initiale à point de vue standard de la trame actuelle en remplaçant par un trou une zone appartenant à la vue à point de vue standard de la trame actuelle, ladite zone appartenant à la vue à point de vue standard correspondant à une zone ayant l'aspect d'un trou sous l'effet d'une distorsion de la vue à point de vue standard en au moins un autre point de vue ;

la génération (340) d'une couche à point de vue standard de la trame actuelle en restaurant le trou présent dans la couche initiale à point de vue standard, compte tenu d'une couche à point de vue standard d'au moins une trame précédant la trame actuelle et compte tenu de la couche initiale à point de vue standard ;

la génération (350) d'une vue de sortie, correspondant audit au moins un autre point de vue, ladite vue de sortie comprenant une vue interpolée, générée en interpolant au moins deux vues d'entrée parmi lesdites au moins deux vues d'entrée, ou une vue extrapolée générée en extrapolant au moins une vue d'entrée parmi lesdites au moins deux vues d'entrée ; et

la restauration (360) d'un trou présent dans la vue de sortie au moyen de la couche à point de vue standard de la trame actuelle.

**2.** Procédé selon la revendication 1, dans lequel le point de vue standard est un point de vue d'une vue d'entrée centrale des au moins deux vues d'entrée.

**3.** Procédé selon la revendication 1 ou 2, dans lequel la génération de la couche à point de vue standard de la trame actuelle comprend :

la restauration du trou présent dans la couche initiale à point de vue standard grâce à l'application d'un inpainting inter-trame qui restaure le trou présent dans la couche initiale à point de vue standard compte tenu d'une couche de fond cumulée, et/ou l'application d'un inpainting intra-trame qui restaure le trou présent dans la couche initiale à point de vue standard compte tenu de la couche initiale à point de vue standard, et

l'actualisation de la couche de fond cumulée au moyen de la couche à point de vue standard de la trame actuelle ;

la couche de fond cumulée étant générée en cumulant un fond d'une couche à point de vue standard de la ou d'au moins une trame précédant la trame actuelle, et

l'actualisation comprenant l'initialisation de la couche de fond cumulée lorsqu'il se produit un changement de scène dans la trame actuelle.

4. Procédé selon la revendication 3, dans lequel le trou présent dans la couche initiale à point de vue standard est restauré par inpainting reposant sur une recherche de patch optimal qui met en oeuvre initialement une restauration de trou à partir d'une structure du fond de la couche initiale à point de vue standard.

5. Procédé selon la revendication 3 ou 4, dans lequel :

la génération de la couche à point de vue standard de la trame actuelle comprend la détermination d'un premier poids et d'un deuxième poids,

le trou présent dans la couche initiale à point de vue standard est restauré en additionnant un résultat, obtenu grâce à l'application du premier poids à un premier résultat, et un résultat obtenu grâce à l'application du deuxième poids à un deuxième résultat,

le premier résultat est obtenu lorsque le trou présent dans la couche initiale à point de vue standard est restauré grâce à l'application de l'inpainting inter-trame, et

le deuxième résultat est obtenu lorsque le trou présent dans la couche initiale à point de vue standard est restauré grâce à l'application de l'inpainting intra-trame.

6. Procédé selon l'une quelconque des revendications 3 à 5, dans lequel :

un premier rapport de fond est le rapport d'un fond au sein d'une première zone de recherche et un deuxième rapport de fond est le rapport d'un fond au sein d'une deuxième zone de recherche,

la première zone de recherche est une zone dans laquelle on recherche un patch source au sein de la couche de fond cumulée lorsqu'il est appliqué un inpainting inter-trame reposant sur une recherche de patch optimal, et la deuxième zone de recherche est une zone dans laquelle on recherche un patch source au sein de la vue à point de vue standard lorsqu'il est appliqué un inpainting intra-trame reposant sur une recherche de patch optimal, et

lorsque le premier rapport de fond est supérieur au deuxième rapport de fond, le trou présent dans la couche initiale à point de vue standard est restauré par l'inpainting inter-trame, et lorsque le premier rapport de fond est inférieur au deuxième rapport de fond, le trou présent dans la couche initiale à point de vue standard est restauré par l'inpainting intra-trame ; et

lorsque le premier rapport de fond et le deuxième rapport de fond sont similaires, la couche à point de vue standard est de préférence générée en mélangeant le trou restauré au moyen de l'inpainting inter-trame et le trou restauré au moyen de l'inpainting intra-trame.

7. Procédé selon l'une quelconque des revendications 3 à 6, dans lequel :

la génération de la couche à point de vue standard de la trame actuelle comprend en outre l'estimation d'un mouvement du point de vue standard de la trame actuelle,

l'estimation comprend :

l'estimation d'un mouvement de chaque bloc, parmi des blocs, au sein de la vue à point de vue standard, et

la diffusion d'un mouvement estimé d'un bloc parmi les blocs qui correspond à un fond à un mouvement d'un bloc parmi les blocs qui correspond à un avant-plan.

8. Support non transitoire lisible par ordinateur comprenant un programme visant à instruire un ordinateur à réaliser le procédé selon l'une quelconque des revendications 1 à 7.

9. Dispositif de traitement d'image destiné à mettre en oeuvre un procédé de rendu multivue apte à assurer une cohérence spatio-temporelle, comprenant :

une unité de détermination de point de vue standard (210) destinée à déterminer un point de vue standard comme étant un centre entre les points de vue de deux vues d'entrée choisies parmi au moins deux vues d'entrée,

un générateur de vue à point de vue standard (220) destiné à générer une vue à point de vue standard (430, 540, 720) eu égard au point de vue standard déterminé, ladite vue à point de vue standard correspondant à une trame actuelle à un instant t prédéterminé ou à une t$^{ième}$ trame, au moyen des au moins deux vues d'entrée correspondant à ladite trame actuelle, chaque vue d'entrée comprenant une image et des informations de disparité,

un générateur de couche initiale à point de vue standard (230) destiné à générer une couche initiale à point de vue standard de la trame actuelle en remplaçant par un trou une zone appartenant à la vue à point de vue standard de la trame actuelle, la zone appartenant à la vue à point de vue standard correspondant à une zone ayant l'aspect d'un trou sous l'effet d'une distorsion de la vue à point de vue standard en au moins un autre point de vue,

un générateur de couche à point de vue standard (240) destiné à générer une couche à point de vue standard de la trame actuelle en restaurant le trou présent dans la couche initiale à point de vue standard, compte tenu d'une couche à point de vue standard d'au moins une trame précédant la trame actuelle et compte tenu de la couche initiale à point de vue standard,

un générateur de vue de sortie (250) destiné à générer une vue de sortie, correspondant audit au moins un autre point de vue, ladite vue de sortie comprenant une vue interpolée générée en interpolant au moins deux vues d'entrée parmi lesdites au moins deux vues d'entrée ou une vue extrapolée générée en extrapolant au moins une vue d'entrée parmi lesdites au moins deux vues d'entrée, et

une unité de restauration de trou de vue de sortie (260) destinée à restaurer un trou présent dans l'image à point de vue de sortie au moyen de la couche à point de vue standard de la trame actuelle.

**10.** Dispositif de traitement d'image selon la revendication 9, dans lequel le point de vue standard est un point de vue d'une vue d'entrée centrale de l'au moins une vue d'entrée.

**11.** Dispositif de traitement d'image selon la revendication 9 ou 10, dans lequel le générateur de couche à point de vue standard (240) comprend :

une unité de restauration de trou destiné à restaurer le trou présent dans la couche initiale à point de vue standard grâce à l'application d'un inpainting inter-trame qui restaure le trou présent dans la couche initiale à point de vue standard compte tenu d'une couche de fond cumulée, et/ou l'application d'un inpainting intra-trame qui restaure le trou présent dans la couche initiale à point de vue standard compte tenu de la couche initiale à point de vue standard, et

un cumulateur de fond de couche destiné à actualiser la couche de fond cumulée, au moyen de la couche à point de vue standard de la trame actuelle ;

la couche de fond cumulée étant générée en cumulant un fond d'une couche à point de vue standard de la ou d'au moins une trame précédant la trame actuelle ;

le cumulateur de fond de couche initialisant de préférence la couche de fond cumulée lorsqu'il se produit un changement de scène dans la trame actuelle.

**12.** Dispositif de traitement d'image selon la revendication 11, dans lequel l'unité de restauration de trou (1240) restaure le trou présent dans la couche initiale à point de vue standard par inpainting reposant sur une recherche de patch optimal qui met en oeuvre initialement une restauration de trou à partir d'une structure du fond de la couche initiale à point de vue standard.

**13.** Dispositif de traitement d'image selon la revendication 11 ou 12, dans lequel :

le générateur de vue à point de vue standard (240) comprend une unité de détermination de poids (1230) destinée à déterminer un premier poids et un deuxième poids,

l'unité de restauration de trou (1240) restaure le trou présent dans la couche initiale à point de vue standard en additionnant un résultat, obtenu grâce à l'application du premier poids à un premier résultat, et un résultat obtenu grâce à l'application du deuxième poids à un deuxième résultat,

le premier résultat est obtenu lorsque le trou présent dans la couche initiale à point de vue standard est restauré grâce à l'application de l'inpainting inter-trame, et

le deuxième résultat est obtenu lorsque le trou présent dans la couche initiale à point de vue standard est restauré grâce à l'application de l'inpainting intra-trame.

**14.** Dispositif de traitement d'image selon l'une quelconque des revendications 11 à 13, dans lequel :

un premier rapport de fond est le rapport d'un fond au sein d'une première zone de recherche et un deuxième rapport de fond est le rapport d'un fond au sein d'une deuxième zone de recherche,

la première zone de recherche est une zone dans laquelle on recherche un patch source au sein de la couche de fond cumulée lorsqu'il est appliqué un inpainting inter-trame reposant sur une recherche de patch optimal, et la deuxième zone de recherche est une zone dans laquelle on recherche un patch source au sein de la vue à point de vue standard lorsqu'il est appliqué un inpainting intra-trame reposant sur une recherche de patch optimal, et

lorsque le premier rapport de fond est supérieur au deuxième rapport de fond, l'unité de restauration de trou restaure le trou présent dans la couche initiale à point de vue standard par l'inpainting inter-trame, et lorsque le premier rapport de fond est inférieur au deuxième rapport de fond, l'unité de restauration de trou restaure le trou présent dans la couche initiale à point de vue standard par l'inpainting intra-trame ; et

lorsque le premier rapport de fond et le deuxième rapport de fond sont similaires, la couche à point de vue standard est de préférence générée en mélangeant le trou restauré au moyen de l'inpainting inter-trame et le trou restauré au moyen de l'inpainting intra-trame.

15. Dispositif de traitement d'image selon l'une quelconque des revendications 11 à 14, dans lequel :

le générateur de couche à point de vue standard (240) comprend en outre un estimateur de mouvement (1210) destiné à estimer un mouvement du point de vue standard de la trame actuelle, et

l'estimateur de mouvement (1210) estime un mouvement de chaque bloc parmi des blocs au sein de la vue à point de vue standard, et diffuse un mouvement estimé d'un bloc parmi les blocs qui correspond à un fond à un mouvement d'un bloc parmi les blocs qui correspond à un avant-plan.

## FIG. 1

Previous frame ((t-1) frame)

First input view    Second input view

Initial standard viewpoint layer (of (t-1) frame)

Standard viewpoint layer

Current frame (t frame)

First input view    Second input view

Initial standard viewpoint layer (of (t-1) frame)

Inter-frame inpainting

Standard viewpoint layer

Extrapolation    Interpolation    Extrapolation

Intra-frame inpainting

Output view

Hole-recovered output view

Hole rendering    Hole rendering    Hole rendering

EP 2 608 148 B1

**FIG. 2**

<u>200</u>

~210
| STANDARD VIEWPOINT DETERMINING UNIT |

~250
| OUTPUT VIEW GENERATOR |

~220
| STANDARD VIEWPOINT VIEW GENERATOR |

~260
| OUTPUT VIEW HOLE RECOVERY UNIT |

~230
| INITIAL STANDARD VIEWPOINT LAYER GENERATOR |

~270
| OUTPUT UNIT |

~240
| STANDARD VIEWPOINT LAYER GENERATOR |

**FIG. 3**

START

DETERMINE STANDARD VIEWPOINT ~310

GENERATE STANDARD VIEWPOINT VIEW ~320

GENERATE INITIAL STANDARD VIEWPOINT LAYER ~330

GENERATE STANDARD VIEWPOINT LAYER ~340

GENERATE OUTPUT VIEW ~350

RECOVER HOLE WITHIN OUTPUT VIEW ~360

OUTPUT VIEW ~370

END

# FIG. 4

410

420

412

414

COLOR/DISPARITY
INTERPOLATION

422

424

INPUT VIEW

INPUT VIEW

432

434

430

STANDARD
VIEWPOINT VIEW

**FIG. 5**

LEFT                         CENTER                         RIGHT

510                           520                           530

$1^{st}$
INPUT VIEW

$n^{th}$
INPUT VIEW

$2n+1^{th}$
INPUT VIEW

522      524

540

542

544

STANDARD
VIEWPOINT VIEW

## FIG. 6

```
        ┌─────────────┐
        │    START    │
        └──────┬──────┘
               │
               ▼
┌─────────────────────────────────────┐
│   GENERATE HOLE MAP WITH RESPECT TO  │ ～ 610
│         STANDARD VIEWPOINT           │
└─────────────────┬───────────────────┘
                  │
                  ▼
┌─────────────────────────────────────┐
│          CONFIGURE INITIAL           │ ～ 620
│      STANDARD VIEWPOINT LAYER        │
└─────────────────┬───────────────────┘
                  │
                  ▼
        ┌─────────────┐
        │     END     │
        └─────────────┘
```

## FIG. 7

710 — INPUT VIEW

715 — INPUT VIEW

720 —

730 —
734 —
732

735
736
738

STANDARD VIEWPOINT VIEW

+

740 —

742 — 746
744

HOLE MAP

750 —

766 762 768

776 772 778

760 —

764 —

770
774

INITIAL STANDARD VIEWPOINT LAYER

780 —

790 —

795

STANDARD VIEWPOINT LAYER

# FIG. 8

720 — STANDARD VIEWPOINT VIEW

730 —

735

WARPING TO LEFT

WARPING TO RIGHT

FIRST OUTPUT IMAGE

SECOND OUTPUT IMAGE

810 —

812

822 —

820

816 —

826

COLLECT

HOLE MAP

740 —

# FIG. 9

720 — STANDARD VIEWPOINT VIEW

730 —        735

⬇ DISPARITY
ANALYSIS

735 —    ⟹ DISPARITY

910

920
GREAT

$\Delta d_L$     $\Delta d_R$

SMALL

⬇ HOLE REGION
PREDICTION

732

730 —    ⟹ DISPARITY

930    940

950
GREAT

$\Delta d_L$     $\Delta d_R$

SMALL  $\alpha \cdot \Delta d_L$  $\alpha \cdot \Delta d_R$

⬇ HOLE MAP
GENERATION

740 —

# FIG. 10

1010 ~ LEFTMOST INPUT VIEW

1020 ~ RIGHTMOST INPUT VIEW

INPUT BASELINE

1030 — LEFTMOST OUTPUT VIEW

1040 — RIGHTMOST OUTPUT VIEW

DISTANCE BETWEEN VIEWPOINTS OF OUTERMOST OUTPUT VIEWS

## FIG. 11

START

CALCULATE AND STORE DISPARITY
DIFFERENCE OF EACH PIXEL ~ 1110

DETERMINE HOLE REGION ~ 1120

CONFIGURE HOLE MAP ~ 1130

END

## FIG. 12

### 240

| | |
|---|---|
| ~ 1210 | ~ 1230 |
| MOTION ESTIMATOR | WEIGHT DETERMINING UNIT |
| ~ 1220 | ~ 1240 |
| SCENE CHANGE DETERMINING UNIT | HOLE RECOVERY UNIT |
| | ~ 1250 |
| | BACKGROUND LAYER ACCUMULATOR |

**FIG. 13**

START

ESTIMATE MOTION — 1310

SCENE CHANGE? — 1320

YES

NO

DETERMINE FIRST WEIGHT AND SECOND WEIGHT — 1330

RECOVER HOLE WITHIN INITIAL STANDARD VIEWPOINT LAYER BASED ON INTRA-FRAME INPAINTING — 1350

RECOVER HOLE WITHIN INITIAL STANDARD VIEWPOINT LAYER BASED ON INTER-FRAME INPAINTING AND INTRA-FRAME INPAINTING — 1340

UPDATE ACCUMULATED BACKGROUND — 1360

END

## FIG. 14

START

CALCULATE PRIORITY OF EACH HOLE PIXEL ~1410

SORT PRIORITIES OF HOLE PIXELS ~1420

DETERMINE TARGET PATCH ~1430

SEARCH FOR SOURCE PATCH ~1440

COPY FOUND SOURCE PATCH TO TARGET PATCH ~1450

REMAINING HOLE PIXEL? ~1460

YES

NO

END

## FIG. 15

CORNER 1510

1514 1516

1512

1540

EDGE 1520

1524 1526

1522

1550

UNIFORM 1530

1534 1536

1560

## FIG. 16

# FIG. 17

**FIG. 18**

1710

PREVIOUS FRAME

1712 — DISPARITY INFORMATION    IMAGE — 1714

CURRENT FRAME

DISPARITY INFORMATION    IMAGE

1722    1720    1724

MOTION ESTIMATION — 1730
1740
1752
1750
1742

MOTION VECTOR DIFFUSION — 1810
1820
1832
1830
1822

1840
1842
1844

ACCUMULATED BACKGROUND LAYER

EP 2 608 148 B1

## FIG. 19

APPLY MOTION VECTOR DIFFUSION

**FIG. 20**

# FIG. 21

```
                    ┌─────────────────┐
                    │      START      │
                    └────────┬────────┘
                             │            ⌐∕2110
          ┌──────────────────▼──────────────────────┐
          │     ESTIMATE MOTION FOR EACH BLOCK       │
          └──────────────────┬──────────────────────┘
                             │            ⌐∕2120
          ┌──────────────────▼──────────────────────┐
          │   CALCULATE AVERAGE DISPARITY OF EACH    │
          │   OF BLOCKS ADJACENT TO CURRENT BLOCK    │
          └──────────────────┬──────────────────────┘
                             │            ⌐∕2130
          ┌──────────────────▼──────────────────────┐
          │    DETERMINE MINIMUM DISPARITY BLOCK     │
          │    HAVING SMALLEST AVERAGE DISPARITY     │
          │      VALUE AMONG ADJACENT BLOCKS         │
          └──────────────────┬──────────────────────┘
                             │
```

AVERAGE DISPARITY OF CURRENT BLOCK > AVERAGE DISPARITY OF MINIMUM DISPARITY BLOCK? ⌐∕2140

NO

YES

DIFFUSE MOTION VECTOR ⌐∕2150

END

FIG. 22

**FIG. 23**

**FIG. 24**

```
                        ┌─────────────┐
                        │    START    │
                        └──────┬──────┘
                               │
                               ▼        ⌇2410
                ◇─────────────────────────────◇        YES
                ◇        SCENE CHANGE?         ◇──────────┐
                ◇─────────────────────────────◇          │
                               │                          ▼         ⌇2420
                              NO              ┌──────────────────────────┐
                               │              │  INITIALIZE ACCUMULATED  │
                               │              │    BACKGROUND LAYER      │
                               │              └──────────────────────────┘
                   ⌇2430       │                          │
      ┌────────────────────────┴──────────┐               │
      │  COMBINE BACKGROUND OF STANDARD    │               │
      │  VIEWPOINT LAYER OF CURRENT        │◀──────────────┘
      │  FRAME WITH ACCUMULATED            │
      │  BACKGROUND LAYER                  │
      └────────────────┬───────────────────┘
                       │
                       ▼
                ┌─────────────┐
                │     END     │
                └─────────────┘
```

# FIG. 25

[t-N] FRAME  [t-N+1] FRAME  [t-N+2] FRAME  [t-N+3] FRAME

DISPARITY INFORMATION OF STANDARD VIEWPOINT LAYER

STANDARD VIEWPOINT LAYER

ACCUMULATED BACKGROUND LAYER

DISPARITY INFORMATION OF ACCUMULATED BACKGROUND LAYER

EP 2 608 148 B1

# FIG. 26

2610
2612
FIRST
OUTPUT IMAGE

2620
2622
SECOND
OUTPUT IMAGE

2630
2632
WARPED STANDARD
VIEWPOINT
LAYER IMAGE

2640
2642
WARPED STANDARD
VIEWPOINT
LAYER IMAGE

2650

2660